# EUROPEAN PATENT APPLICATION

(11) **EP 1 796 355 A2**
(43) Date of publication of application: **13.06.2007**
(21) Application number: 06025213.7
(22) Date of filing: 06.12.2006
(51) Int. Cl.: H04M 1/725, H04M 1/73

(54) **Screen image presentation apparatus and method for mobile phone**

(30) Priority: 06.12.2005 KR 20050118428
(71) Applicant: Samsung Electronics Co., Ltd., Suwon-si, Gyeonggi-Do (KR)
(72) Inventor: Seo, Jeong-Wook, Suseong-gu Daegu Metropolitan City (KR); Lee, Jong Kerl, Gumi-si Gyeongsangbuk-do (KR); Park, Wei Jin, Seoul (KR)
(74) Representative: Lang, Johannes

(57) **Abstract**

An idle mode screen image presentation apparatus and method is provided for a mobile phone. A screen image presentation apparatus for a mobile phone according to the present invention includes a memory storing a character house including a background and function items for executing functions of the mobile phone; a controller presenting the character house in an idle mode of the mobile phone and providing information, when one of the function items is selected, on a function associated with the selected function item; and a display displaying the character house under the control of the controller.

## Description

### BACKGROUND OF THE INVENTION

### Field of the Invention

The present invention relates to portable phone and, in particular, to an idle mode screen image presentation apparatus and method for a mobile phone.

### Description of the Related Art

Generally, a portable terminal means a cordless electronic device, especially represented by a mobile phone. Recent mobile phones are implemented with various functions in addition to basic voice communication. Such phones include a camera phone equipped with a camera module, a digital TV phone equipped with a Digital Multimedia Broadcast (DMB) or Digital Video Broadcast (DVB) module, and an MP3 phone equipped with an MPEG-1 Audio Layer 3 (MP3) module. That is, the mobile phone has developed into a multipurpose electronic device.

Typically, an advanced mobile phone having an advanced multimedia processing ability is provided with a liquid crystal display (LCD) to display multimedia data. In order to effectively display information, various screen display techniques have been researched and developed. That is, a screen display scheme is designed to support viewing multimedia data while simultaneously displaying information related to a basic task. For example, a mobile phone can be implemented to display a preset image while the mobile phone is in an idle state. In this case, the image of the idle screen view is downloaded from a website or taken by an inbuilt camera. However, conventional mobile phones limit design to a screen image to be presented on the display by itself. Although there has been a screen image design method in which the screen image is designed with a background image, text, and clock selected by a user, most of the conventional screen image design techniques do not enable design of a dynamic screen image with various character images.

### SUMMARY OF THE INVENTION

The present invention has been made in an effort to solve the above problems, and it is an object of the present invention to provide a screen image presentation apparatus and method for a mobile phone.

It is another object of the present invention to provide a screen image presentation apparatus and method for a mobile phone that are capable of improving usability of mobile phone by means of a character as an artificial intelligent agent.

It is another object of the present invention to provide a screen image presentation apparatus and method for a mobile phone that are capable of presenting a character house having an artificial intelligent character, items, and background as a screen image.

It is another object of the present invention to provide a screen image presentation apparatus and method for a mobile phone that are capable of making dynamic a presentation on a screen of the mobile phone by displaying an artificial intelligence-based character house, in which an intelligent character resides, as a screen image in a specific operation mode of the mobile phone.

It is another object of the present invention to provide a screen image presentation apparatus and method for a mobile phone that are capable of providing an intelligent character with an artificial intelligence-based character house, the intelligent character reacting and adapting to evolution of conditions of the mobile phone in the form of an animation, sound, and text.

It is another object of the present invention to provide a screen image presentation apparatus and method for a mobile phone that are capable of improving aesthetics of screen image by means of a character house consisted of various visible items.

It is another object of the present invention to provide a screen image presentation apparatus and method for a mobile phone that are capable of informing progress of time by means of a character house having a background which is changed according to time periods of a day.

It is another object of the present invention to provide a screen image presentation apparatus and method for a mobile phone that are capable of providing a character house as an animated screen image for a specific operation mode of a mobile phone, the character house including a character which shows conditions and emotions reflecting states of the mobile phone in the form of an animation, sound, and text; background; function items for showing system information on the mobile phone; decoration items for improving aesthetics of the screen image; and motion items moving along respective movement lines in the screen house.

It is another object of the present invention to provide a screen image presentation apparatus and method for a mobile phone that are capable of informing current time zone of a day by means of a character house including a background and items and especially an intelligent character which shows greeting behaviors with an animation, sound, and text in the time zone.

It is another object of the present invention to provide a screen image presentation apparatus and method for a mobile phone that are capable of informing conditions and emotions representing states of a mobile phone by means of character quotients, emoticons, and text expressions provided in a character house have a character, background, and items.

It is another object of the present invention to provide a screen image presentation apparatus andmethod for a mobile phone that are capable of presenting a character house having a character, background, and items, as an idle mode screen image of the mobile phone.

It is another object of the present invention to provide a screen image presentation apparatus andmethod for a mobile phone that are capable of generating a character house having a character, background, and items, as a screen image for an idle mode of the mobile phone.

It is another object of the present invention to provide a screen image presentation apparatus andmethod for a mobile phone that enable a user to design a character house, by selecting a character, background, and items, to be used as a screen image in an idle mode of the mobile phone.

It is another obj ect of the present invention to provide a screen image presentation apparatus and method for a mobile phone that enable a user to edit a character house consisted of a character, background, and items, by adding and deleting the items, the character house being used as a screen image for a specific operation mode of the mobile phone,

It is another object of the present invention to provide a screen image presentation apparatus and method for a mobile phone that are capable of adding new items or editing the items constituting a character house while the character house is presented as a screen image for a specific operation mode of the mobile phone.

It is another object of the present invention to provide a screen image presentation apparatus and method for a mobile phone that are capable of adding new items to or removing or repositioning items presented with a character house, the character house consisting of a background, character, and items and being used as a screen image for a specific operation mode of the mobile terminal.

It is another object of the present invention to provide a screen image presentation apparatus and method for a mobile phone that enable a user to select one of partitioned sectors of a character house to see the selected sector in an enlarged form such that the user can perform a fine adjustment of a position of an item located in the selected sector, the character house consisting of a background, character, and items, and being used for a screen image for a specific operation mode of the mobile terminal.

In accordance with an aspect of the present invention, the above and other objects are accomplished by a screen image presentation apparatus of a mobile phone. The screen image presentation apparatus includes a memory which stores a character house including a character for presenting a condition the mobile phone; a controller which controls to present the character house at a predetermined presentation time; and a display which displays the character house under the control of the controller.

In accordance with another aspect of the present invention, the above and other objects are accomplished by a screen image presentation method for a mobile phone. The screen image presentation method includes checking configuration information on a character house having a character representing a condition which is determined by usage pattern of the mobile phone; and presenting the character house in a specific operation state of the mobile phone on the basis of the configuration information.

In accordance with another aspect of the present invention, the above and other objects are accomplished by a screen image presentation method for a mobile phone. The screen image presentation method includes registering configuration information of a character house in a program mode; editing the character house having a background and items in an editing mode; checking the configuration information of the character house; and presenting the character house with a character, items, and background on the basis of the configuration information of the character house.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram illustrating a configuration of a mobile phone employed a screen image presentation apparatus and method according to an exemplary embodiment of the present invention;
FIGs. 2a to 2c are views illustrating a concept of a character house of a screen image presentation apparatus according to an exemplary embodiment of the present invention;
FIG. 3 is a screen image illustrating an exemplary character house according to an exemplary embodiment of the present invention;
FIGs. 4a to 4n are screen images illustrating steps for implementing exemplary character animations in a screen image presentation technique according to an exemplary embodiment of the present invention;
FIGs. 5a to 5c are screen images illustrating steps for implementing an animated background in a screen image presentation technique according to an exemplary embodiment of the present invention,
FIG. 6 shows screen images illustrating background images for implementing an animated background in a screen image presentation technique according to an exemplary embodiment of the present invention;
FIG. 7a is screen image illustrating a character quotient module on the idle mode screen in a screen image presentation technique according to an exemplary embodiment of the present invention;
FIG. 7b is an enlarged view illustrating the character quotient module of FIG. 7a;
FIG. 8 is a drawing illustrating a table of emoticons to be displayed with the quotient module of FIG. 7b.
FIGs. 9a to 91 are views illustrating how to present function items in a screen image presentation technique according to an exemplary embodiment of the present invention;
FIGs. 10a to 10c are views illustrating steps of presenting motion items in a screen image presentation technique according to an exemplary embodiment of the present invention;
FIGs. 11a to 11c are views illustrating steps of presenting decoration items in a screen image presentation technique according to an exemplary embodiment of the present invention;
FIG. 12 shows screen images illustrating character behaviors in the screen image presentation technique according to an exemplary embodiment of the present invention;
FIG. 13 is a screen image illustrating a character animation with an event in screen image presentation technique according to an exemplary embodiment of the present invention;
FIG. 14 is a flowchart illustrating a character house presentation procedure of a screen image presentation method according to an exemplary embodiment of the present invention;
FIG. 15 is a flowchart illustrating the background presentation procedure of FIG. 14;
FIG. 16 is a flowchart illustrating the item presentation procedure of FIG. 14;
FIG. 17 is a flowchart illustrating a procedure for presenting a motion item in the screen image presentation technique according to an exemplary embodiment of the present invention;
FIGs. 18a to 18d are flowcharts illustrating a procedure for presenting function items in the screen image presentation technique according to an exemplary embodiment of the present invention;
FIG. 19 is a flowchart illustrating a character presentation procedure of the screen image presentation method according to an exemplary embodiment of the present invention;
FIG. 20 is a flowchart illustrating a greeting behavior presentation procedure of FIG. 19;
FIG. 21 is a flowchart illustrating a greeting event presentation procedure occurred during a greeting behavior of the character of the screen image presentation technique according to an exemplary embodiment of the present invention;
FIGs. 22a and 22b are flowchart illustrating an animation behavior presentation procedure of the screen image presentation technique according to an exemplary embodiment of the present invention;
FIGs. 23a and 23b show the character shift information determination procedure in detail;
FIG. 24 is a flowchart illustrating a screen house presentation procedure of a screen image presentation method for a mobile phone according to another exemplary embodiment of the present invention;
FIG. 25 is a state diagram illustrating a character house design procedure of a screen image presentation method according to an exemplary embodiment of the present invention;
FIG. 26 is a state diagram illustrating transitions between the character house configuration mode and the character house editing mode of FIG. 25;
FIG. 27 is a screen image illustrating a character house configuration screen in the character house configuration mode of FIG. 25;
FIG. 28 is a state diagram illustrating transitions between the character house configuration mode and the character house editing mode of FIG. 25;
FIG. 29 shows screen images illustrating a procedure for setting a "character house presentation on/off" option on the character house configuration screen of FIG. 25;
FIG. 30 is a state diagram illustrating transitions among the character house editing mode and specific item editing modes of FIG. 25;
FIG. 31 shows a screen image illustrating an example character house editing screen in the character house editing mode of FIG. 25;
FIG. 32 is a state diagram illustrating transitions between the character house editing mode and the background selection mode of FIG. 25;
FIG. 33 shows screen images illustrating a procedure for selecting a background on the background selection mode of FIG. 32;
FIG. 34 is a state diagram illustrating transitions between the character house editing mode and item editing modes of FIG. 25;
FIGs. 35a to 35d show screen images illustrating a procedure for adding an item to the character house in the character house editing mode of FIG. 34;
FIG. 36 is a state diagram illustrating transitions between the character house editing mode and the selected item editing mode via the edited item shortcut selection mode of FIG. 25;
FIGs. 37a to 37c show screen images illustrating a procedure for assigning shortcut key in the edited item shortcut selection mode of FIG. 36;

### DETAILED DESCRIPTION OF EXEMPLARY EMBODIMENTS

Exemplary embodiments of the present invention are described with reference to the accompanying drawings in detail. The same reference numbers will be used throughout the drawings to refer to the same or like parts. Detailed descriptions of well-known functions and structures incorporated herein may be omitted to avoid obscuring the subject matter of the present invention.

Note that the same or similar elements in the drawings are designated by the same reference numerals as far as possible although they are shown in different drawings.

The following definitions are provided to enable a clear and consistent understanding of the detailed description and the claims. Unless otherwise noted, terms are to be understood according conventional usage by those skilled in the relevant art.

A "screen image" is an image presented on a display screen of the mobile phone.

"House," "avatar house," and "character house" are used interchangeably to refer to a visible object presented on screen in a specific mode of the mobile phone. The house is displayed with characters, items, and background.

"Item" is a visible object for enriching the house and includes decoration items, function items for notifying states of specific functions, and motion items that move along preset paths.

"Background" is an image forming a background graphics of the house.

"Character" is a visible object resides in the character house and can express a state of the mobile phone in an emotional manner. The character includes fictional characters represented by a human, avatar, animal, etc. that can express various emotions. Accordingly, the character can express emotions with motions.

In the present invention the character house can be correlated with a background, a character, and at least one item.

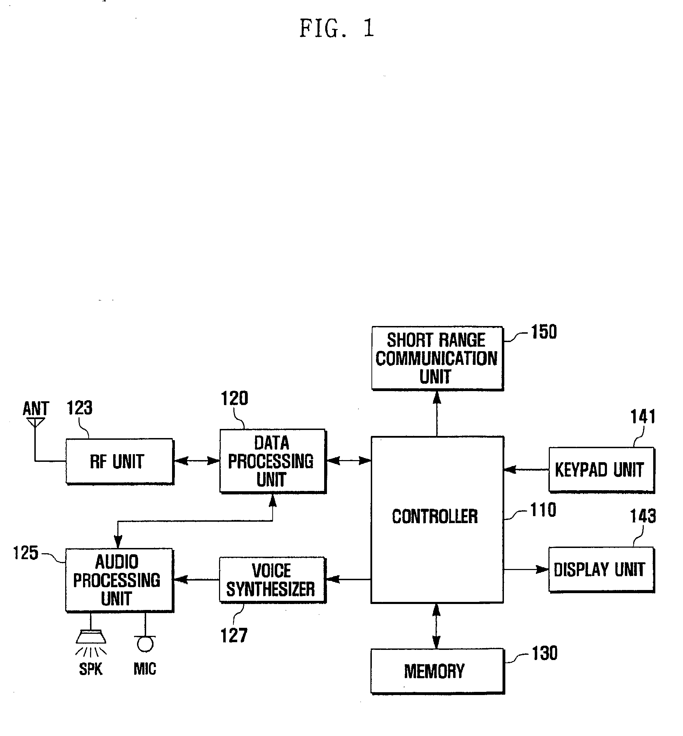

FIG. 1 is a block diagram illustrating a configuration of a mobile phone employing a screen image presentation apparatus and method according to an exemplary embodiment of the present invention.

Referring to FIG. 1, the mobile phone includes a controller 110, data processing unit 120, radio frequency (RF) unit 123, audio processing unit 125, voice synthesizer 127, memory 130, keypad unit 141, and display unit 143.

The RF unit 123 enables the mobile phone to communicate with other terminals over a wireless channel. The RF unit 123 includes an RF transmitter for up-converting and amplifying the frequency of a transmitted signal, and an RF receiver for low-noise amplifying a received signal and down-converting the frequency of the received signal.

The data processing unit 120 includes a transmitter for coding and modulating the transmitted signal, and a receiver for demodulating and decoding the received signal. The data processing unit 120 may include a modem and a codec. The voice synthesizer 129 performs a function of converting a text message output from the controller 110 or received from outside into a voice signal.

The keypad unit 141 is provided with a plurality of alphanumeric keys for input data and functions key for setting various functions.

The memory 130 includes a program memory and a data memory. The program memory stores programs for processing incoming and outgoing calls, and programs for presenting the character house for a specific state of the mobile phone and controlling reactions of the characters in response to events caused by operations of the mobile phone and for structuring the screen image having the character house with the characters, according to an embodiment of the present invention. The data memory includes a character memory for storing character images and information on the characters for performing the embodiment of the present invention and a text memory for storing text data for emotional expressions of the characters. The data memory also temporarily stores data generated while the programs are executed. The term "character house image" is interchangeably used to refer to the screen image presented in a specific mode of the mobile phone. The specific mode or specific state may refer to the idle mode or idle state.

The character memory may include a character storage for storing information on the structures of the characters and images thereof, a item storage for storing information on the structures of the items and image thereof, a background storage for storing background images, and a character storage for storing information on the structures of the character houses and images thereof. The character house structure may be stored in the form of information on a combination of the character, item, and background image, and the images stored in the respective storages may be used individually.

A character is provided with information on character animations expressing emotional states for the mobile phone, character images for expressing emotions in response to text messages (for example, SMS, EMS, MMS, etc.), and character images for expressing emotions in response to events occurring in the mobile phone. In this embodiment, it is assumed that a plurality of character images expressing the emotional states for the mobile phone, a plurality of character images expressing the emotions in accordance with the contents of the text messages, and a plurality of character images expressing the emotions in accordance with the events occurring in the mobile phone. The memory for storing the images operates in a file structure. A character file structure includes a header and character images, and the header contains information on identifiers, start delimiters, a number of images, display positions, names of animations. In a character transmission mode, the headers and character images are transmitted after being processed in the form of a transmission file.

The character house is displayed on the screen together with a background image, a character, and at least one item in a specific mode (for example, an idle mode) of the mobile phone. That is, the character house is designed by arranging the items on the background image for a specific mode screen (for example, an idle mode screen), the items and the background images being selected by the user. At this time, the file structure of the character house may include a header and a plurality of images, and the header may include a header of the character house and the item headers of the items associated with the character house. The character house header contains information on the character house identifier, the positions of the characters on the screen, the sizes of the characters, and the names of the characters; and each item header contains information on the item index, the position of the item in relation with the character house, and the name of the item. In a character house transmission mode, the headers of the character house and the items associated with the character house and the background and item images are transmitted in the form of a compressed file.

The items means the images presented in association with the character house on the screen. Each item may be displayed in a specific association with the character house or regardless of the character house. In the case that the item is not associated with the character house, the item should be transmitted individually. The item includes a header and an image, and the item header contains information on the item index, the position of the item in relation with the character house, and the name of the item. In the case that the item is not associated with the character house, the information on the position of the item has a default value.

In this embodiment, the character is used for presenting the information on the states and event occurrences of the mobile phone; the character house is used for indicating the specific operation mode (for example, the idle mode) of the mobile; the item is used for showing the functions of the mobile phone, decorating the character house, and showing the screen dynamic; and the background image is used for providing a background of the characters and items associated with the character house.

The controller 110 controls general operations of the mobile phone. The controller 110 may be integrated with the data processing unit 120. That is, the controller 110, data processing module 120, audio processing unit 125, and voice synthesizer 127 can be integrated into a mobile station modem (MSM) chip. In this embodiment, the controller 110 controls so as to select the characters, items, background image, character house, texts, and sounds; arrange the selected images and texts at the present positions on the screen of the display unit 143; and output the texts as voice sounds under the support of the voice synthesizer 127.

The display unit 143 displays the state of the mobile phone under the control of the controller 110. The display unit 143 may be implemented with a liquid crystal display (LCD) together with a LCD controller, extra memory for storing the display data, and LCD display device. In the case that the display unit 143 is implemented with a touchscreen function, the display unit 143 can operate an input device.

The characters represent a graphical user interface (GUI) including the character displayed on the screen of the display unit 143 in the specific mode of the mobile phone. The character house is a space in which the character having an artificial intelligence resides such that the user can experience a virtual space with virtual character who talks and behaves. The user can quickly learn the functions of the mobile phone with the assistances of the character house and enjoy with the vivid characters.

The functions of the character house can be summarized as followings.

The character house has a function expressing a dynamic character. First, the character house can express the condition and emotion of the current character in the animation, sound, and text according to a character scenario associated with the character. Second, the character house has a function presenting a background of the screen for a specific mode (especially, the idle mode) of the mobile phone that is changed in accordance with a progress of time. Third, the character house has a function displaying items. The items, that are displayed in association with the character house, can be classified by function. In this embodiment the items can be classified into three categories. The first is the function item for presenting the functions and system information on the mobile phone in order to enhance the user's convenience. The second is the decoration item for increasing aesthetic satisfaction by adding various images to the character house. The third is the motion items that make the character house screen dynamic by adding the motion images (for example, the cloud, bird, etc.).

The character house may further provide a greeting function with which the character associated with the character house gives greetings with appropriate sounds at preset times. An additional function such as allowing a user to give a present to the character can be implemented.

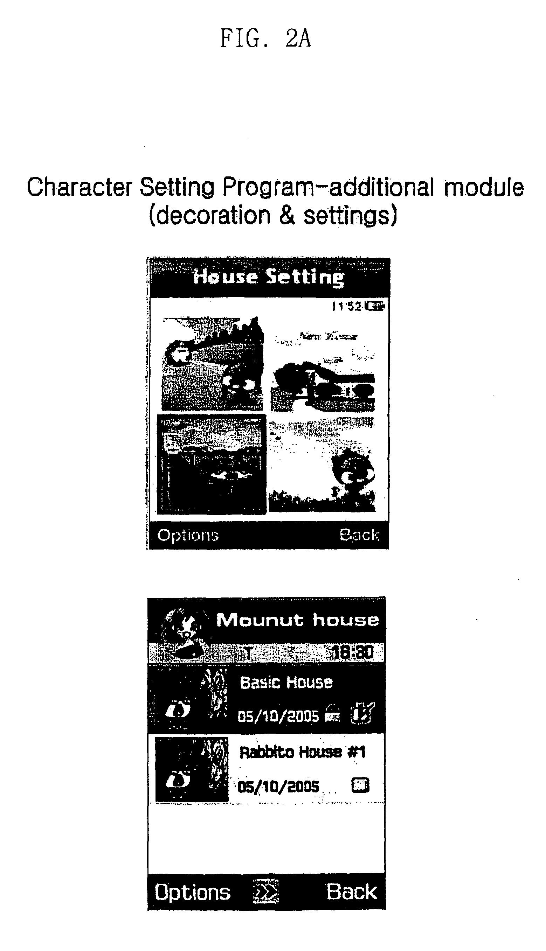

FIGs. 2a to 2c are views illustrating a concept of a character house of a screen image presentation apparatus according to an exemplary embodiment of the present invention.

FIG. 2a shows a house setting screen for selecting a character house to be displayed on the screen. The house setting screen is displayed on the screen under the control of a character setting program. If the character setting program is executed, 4 character house images are displayed in corresponding tiled windows on the screen of the display unit 143. When a number of the character house images are less than 4, the windows that are not allocated for the character house image can be shown empty.

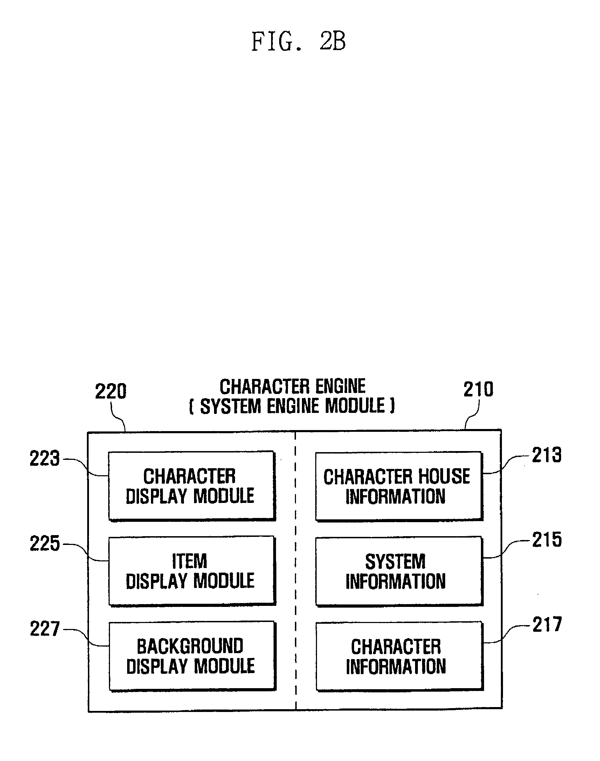

If a character house is selected from the house setting screen, the controller 110 operates a character engine which is structured as shown in FIG. 2b. Upon being activated, the character engine stores information of the selected character house into a character house information storage module 210 and executes a character house expression module 220. That is, the character engine includes the character house information storage module 210 and the character house expression module 220. The character house information storage module 210 is a module for storing information on the character houses and the character to be displayed in association with each other. In this embodiment, the character house information storage module 210 includes and character house information storage 213, system information storage 215, and character information storage 217.

The character information storage 217 stores emotion information, status information, quotient information, and text and sound information associated with the emotions and statuses of the character. The character information storage 217 also stores animation information for animating the character in a specific status. The mobile phone processes various events occurred while operating and updates the quotients of the character correspondingly to the events.

The quotient information includes a physical quotient (HQ), emotion quotient (EQ), intelligent quotient (IQ), and social quotient (SQ), that are used for determining the status and emotion of the character. The controller 110 accumulates the quotients associated with the events whenever an event is processed and determines the status of the mobile phone on the basis of the quotient analysis results. The emotion of the character is determined according to the quotients and user's feedback analysis results. The emotion of the character can be determined in accordance with a content related to the event (for example, a text message) that is obtained during the process. The text and sound information associated with the emotion can be stored together with the character expression. The character information storage 217 includes information on the animation of the character that is expressed in a specific mode (for example, an idle mode) of the mobile phone.

The system information storage 215 stores system information on the function items for displaying a memory capacity of the mobile phone, scheduled alarms, unreadmails. The items associated with the character house includes the decoration items, motion items, and function items. The function items present the operations and functions of the mobile phone. In this embodiment, the items for presenting a memory status, preset alarm times, and a number of unread mails are described as examples of the function items.

The character house information storage 213 stores the information on the character house that are defined by a character house setting program such that the character house information includes the types and positions of the items and the type of the background associated with the character house. The character house information storage 213 stores the information on the character house images except for the character and the function items. Thus, the character house information 213 stores the information on the decoration items, motion items, and the background images.

The character house expression module 220 includes a character display module 223, an item display module 225, and a background display module 227.

The character display module 223 renders the character animation of the character house. The character display includes a mobility and entrance of the character and a text balloon or a sound effect associated with the behavior of the character. The character display module 223 can make the character express special motions such as a greeting. The item display module 225 displays the items at preset positions with reference to the character house information on the current character house and the system information. The items are displayed in different manner by item category (decoration, motion, and function) . The background display module 227 displays the background image in accordance with the information stored in the character house information storage 213. The background image can be configured such that the brightness of the background image changes according to a progress of the time.

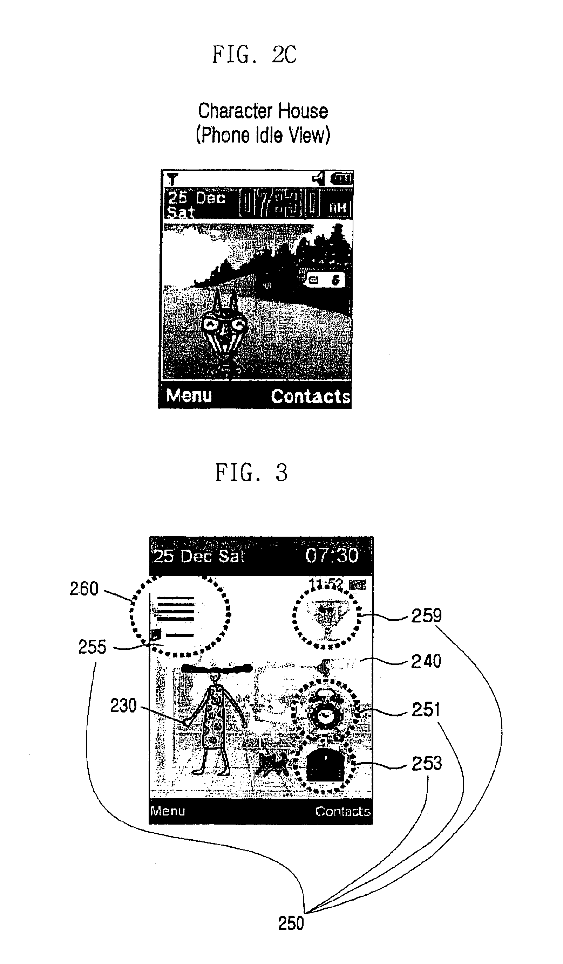

FIG. 2c shows an exemplary character house screen displayed by the character engine of FIG. 2b. The character house is displayed in a specific mode (for example, an idle mode) of the mobile phone and includes a character, items, and a background.

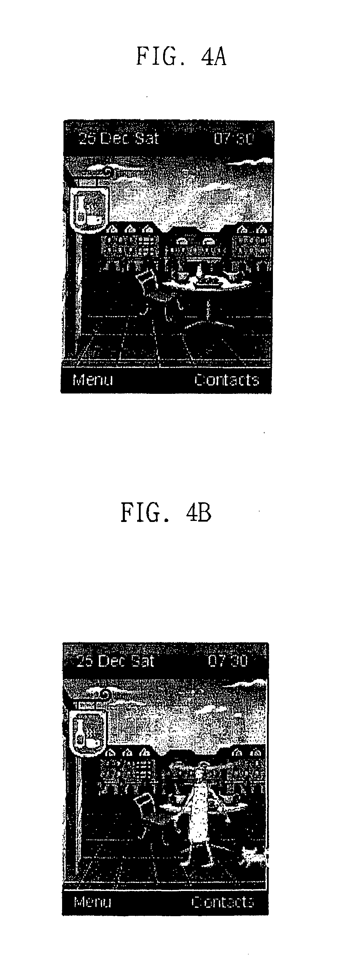

FIG. 3 is a screen image illustrating an exemplary character house according to an exemplary embodiment of the present invention. The character house screen provides information on the detailed status, which is not provided with a normal idle mode screen, for the mobile phone together with decoration effects, as shown in FIG. 3.

Referring to FIG. 3, a character 230 is displayed in the form of an animated character in association with the character house. The character 230 behaves in a motion preset for the idle mode of the mobile phone so as to alarm at preset times in corresponding animation together with a text and sound effect. The character 230 can be set to animate for giving items as presents for the character house in a random manner. In order to express the state of the mobile phone and the emotion of the character representing the state of the mobile phone, the character 230 expresses the emotion in the animation according to the state of the mobile phone and an emotion model together with the sound and text. The background 240 is represented by a background image of the character house and the brightness of the background can be changed in accordance with a progress of the time.

The items 250 give effects for decorating the character house and inform the operations of the mobile phone. That is, the function items 251, 253, 255, and 259 decorate the character house and present the statuses of the preset functions and operations. For example, the function item 251 is a clock item for showing the time preset for alarming, and the function item 253 is a mailbox item for showing the number of the unread mails. If a plurality of alarms is set, the most close alarm time is displayed. The function item 255 is a memory monitor item for displaying the state of the memory. The decoration item 259 is an item for decorating the character house. The motion item (not shown) can be activated for decorating the character house.

The character quotient module 260 includes a character quotient (in this embodiment, the social quotient (SQ) represented by values assigned for the events related to the communication), a physical quotient (HQ) represented by values assigned for events related to the performance for the mobile phone, an intelligent quotient (IQ) represented by values assigned for an amount of information stored in the mobile phone, an emotional quotient (EQ) represented by values assigned for events related to the multimedia. The character quotient module 260 can be configured to be fixed at a position or floats across the screen.

How the character 230 express the state of the mobile phone in emotional manner is described hereinafter.

The character 230 of the character house has three basic expression factors. The first is an animation, which enables the character 230 to express a state and emotion in motion. The second is a text, which enables the character 230 to express a state and emotion in text. The text can be presented in the form of a text balloon. And the third is a speech, which enable the character 230 to express a state and emotion in a voice or sound effect. The character 230 can express various states and emotions, and the state and emotion of the character 230 are determined in accordance with a state decision model algorithm and an emotion mode decision algorithm as a character scenario dependent on the variation of the quotient values of the character. The decision on the state and emotion mode of the character on the basis of the character scenario is disclosed in the Korean Patent Application No. 2005-107174. The character 230 of the character house expresses the state information and the emotion mode using the character image together with a unique voice effect and text balloon.

The character 230 can be implemented with an animation in which the character 230 moves around the character house and disappears outside the screen and then appears from outside. That is, the character 230 expresses the state and emotion with a motion, sound effect, and text, if the time to express the state and emotion has arrived. The state and emotion of the character 230 is expressed when the quotients reach respective threshold values, rather than always. However, the character house is always displayed in the specificmode screen. For example, if the mobile phone enters an idle mode, the character house is displayed on the screen. The character house screen disappears when a preset display time is expired or when the mobile phone enters other operation mode. If the character house is displayed at the idle mode, the character 230 expresses the state and emotion in motion and with other animations.

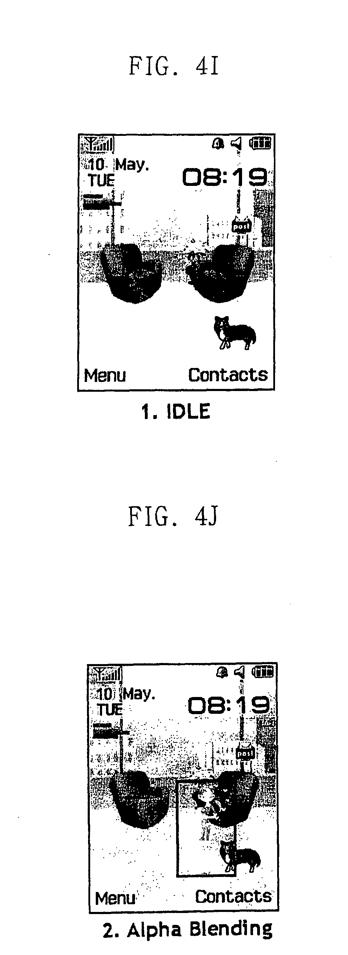

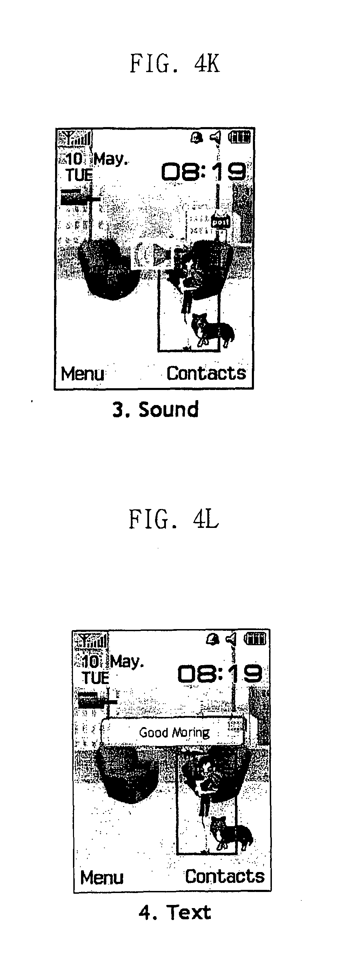

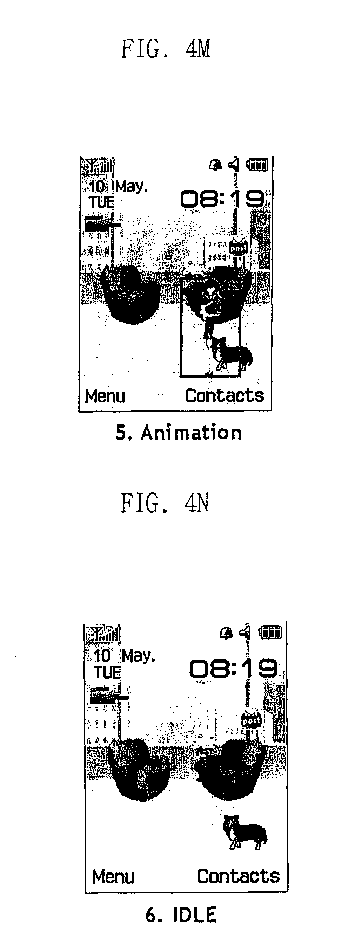

FIGs. 4a to 4h are screen images illustrating steps for implementing an exemplary character animation in a screen image presentation technique according to an exemplary embodiment of the present invention, and FIGs. 4i to 4n are screen images illustrating steps of another exemplary character animation in a screen image presentation technique according to an exemplary embodiment of the present invention.

Referring to FIGs. 4a to 4h, the character 230 moves in a preset behavior pattern in the character house. The character 230 appears at a random position on the screen, makes a speech expression and then moves around. If the character house disappears on the screen while the character moves around the character house, the character 230 appears at a random position and repeats the behavior after a predetermined time has elapsed. The motion, sound effect, and text can be selectively disabled. The character house can be expressed through six steps as followings.

As shown in FIG. 4a, if the mobile phone enters the idle mode, the items and background image of the character house are displayed. Next, as shown in FIG. 4b, a character 230 appears at a position in the character house. The character 230 can appear with a fade-in effect. That is, the character 230 can be implemented with an alpha blending technique such that the transparency of the character 230 changes from 100% to 0% gradually. For example, the transparency reduces by 25% per 0.5 second such that the character 230 is gradually faded in to be completely appeared in 2 second. The character 230 starts appearing at a random position. The character 230 is preferably implemented so that the character is at a position where the character incompletely appears. That is, the character 230 is configured to appear at a random position but where the character 230 can be completely shown across the border of the screen.

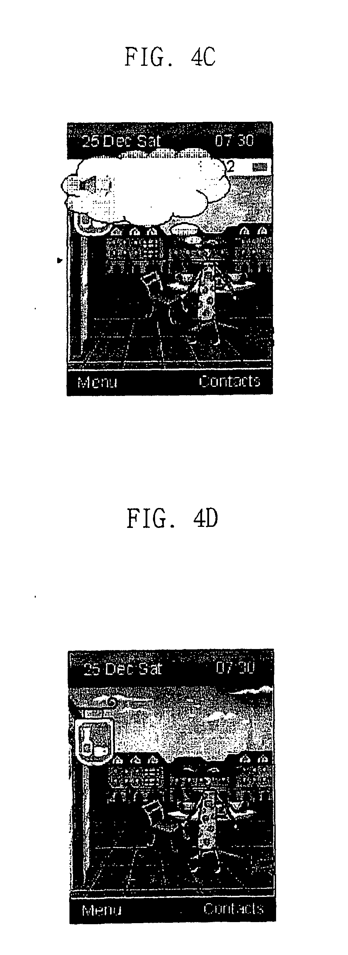

After the character 230 is displayed, a sound effect is output in accordance with the state of the character, with a notification icon, as shown in FIG 4c. The sound effect is output at once and repeated one more time when the character reappears. Of course, the sound effect can be cancelled.

After the sound effect and the text are output, the character 230 is animated as shown in FIG. 4d. The character animation process is repeated until the character 230 disappears. The character animation is performed at a fixed position.

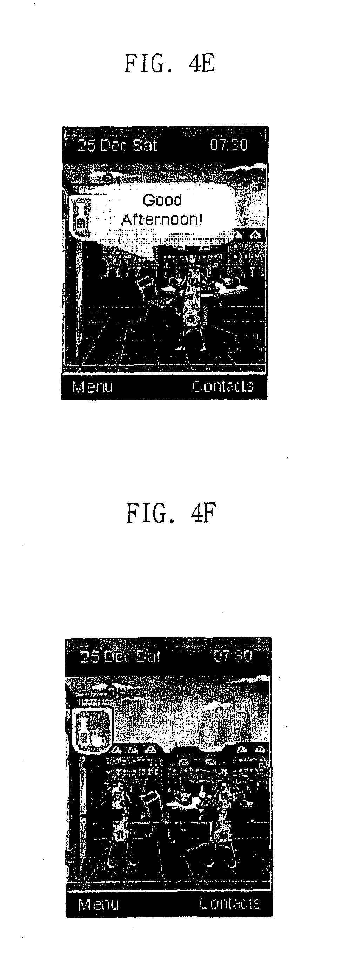

As shown in FIG. 4e, after the character animation starts, the state and emotion of the character 230 is expressed with a text. The text is expressed in the text balloon in consideration of the time taken for the user to read the text. The text balloon is displayed in the form of semitransparent image having about 30% of transparency and is open about 3 seconds in consideration of the reading time.

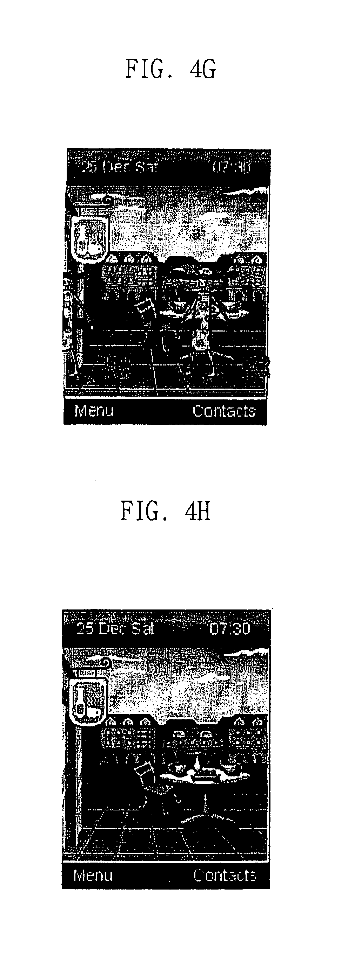

After the text balloon disappears, the character 230 moves as shown in FIGs. 4f and 4g. The movement direction of the character 230 can be changed according to the position at which the character 230 appears. That is, the position at which the character 230 appears is checked such that the character 230 moves in a direction to which the character can secure the longest distance for movement. The character 230 moves at a predetermined speed. It is preferred that the character 230 is set to move at the speed about 20 pixels per second. The character 230 disappears across the border of the screen. If the character 230 disappears completely, an initial idle mode screen is displayed as shown in FIG. 4h identical with FIG. 4a. After a predetermined time (about 2 seconds) elapses, the steps 4a to 4g are repeated.

The character animation illustrated in FIGs. 4i to 4h is an example in which the character does not move. Referring to FIGs. 4i to 4h, the character is displayed in the idle mode screen. In the initial state of the idle mode shown in FIG. 4i, the preset items and background image are displayed but not the character. Next, as shown in FIG. 4j, the character appears on the screen. The character appears at a predetermined position on the screen. The appearance position is changed to the bottom right position in relation with a center of the screen. The appearance position can be changed according to the size of the character. The character can be set to appear with a fade-in effect in such a manner that the transparency of the character changes from 100% to 0% gradually. For example, the transparency reduces by 25% per 0.5 second such that the character is gradually faded in to be completely appeared in 2 second.

After the character 230 is completely displayed, a sound effect is output in accordance with the state of the character, with a notification icon as shown in FIG. 4k. The sound effect is output at once and repeated one more time when the character reappears.

Next, a text is displayed for expressing the current state and emotion of the character. The text is presented in the text balloon having a transparency of 30%. The text can be displayed in synchronization with a sound. The text balloon is expressed in consideration of time taken for the user to read the text. For example, the text balloon can be set to disappear after 1.5 seconds.

After the sound effect ends and the text balloon disappears, the character is animated as shown in FIG. 4m. The character animation process is repeated until the character disappears in the character house as shown in FIG 4n.

As described above, the character animation process is performed in such an order that the it ems 250 and background image 240 displayed, the character 230 appears in a fade-in effect, the sound effect is output for notifying the state of the mobile phone, the text is presented for notifying the state of the mobile phone, and the character animation is performed in the character house.

The character animation means a motion behavior of the character without moving around the screen, and the character movement means a behavior of the character moving around the screen. The character animation and the movement can be performed at the same time. The character 230 can appear with the items 250 and the background at the same time. The character 230 can appears in the form of an opaque object, i.e. with a 0% of transparency. The steps of outputting sound effect and the text can be skipped.

How to present the background of the character is explained hereinafter. The presentation of the background can be performed such that the background image changes according to the progress of the time. Of course a fixed background image can be used.

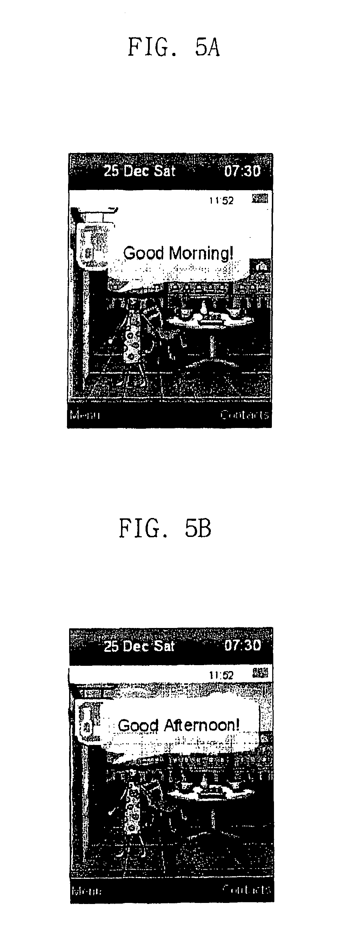

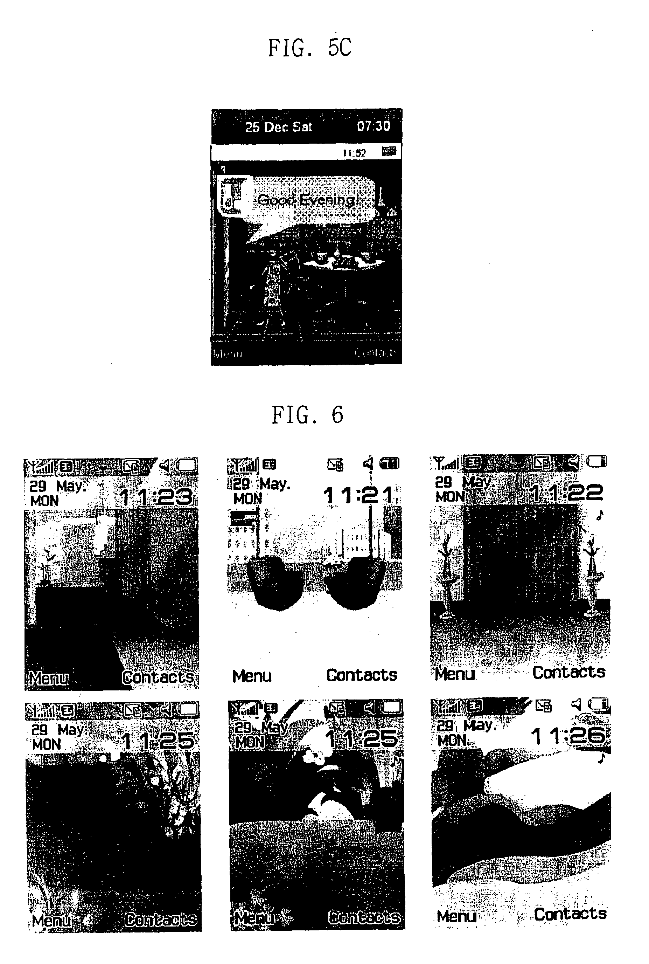

FIGs. 5a to 5c are screen images illustrating steps for implementing an animated background in a screen image presentation technique according to an exemplary embodiment of the present invention, and FIG. 6 shows screen images illustrating background images for implementing an animated background in a screen image presentation technique according to an exemplary embodiment of the present invention. The background images of FIG. 6 can be used for the animated background or the fixed background.

Referring to FIGs. 5a and 5c, the animated background is implemented with several background images that are presented in series according to the progress of the time. In this embodiment, a day is divided into a few time periods, i.e. amorning, afternoon, evening, and night; the background is placed with different background images for the respective time periods. In this embodiment, if an animation background 240 is set by the user, the background images of the character house changes according the time periods of a day. Since the change of the background is performed in accordance with the progress of the time, the background of the character house changed with different brightness background images are assigned for the morning, day, and night as shown in FIGs. 5a to 5c. In this embodiment, the time periods of the day are defined as following table 1. In this case, the character can be set to give greetings corresponding time periods whenever each time period starts.

**Table 1**

| Class | Time Period | Description |
|---|---|---|
| Morning | 06:00~12:00 | A little Bright Image having sunshine |
| Afternoon | 12:00~18:00 | Warm Image having Sun in the middle sky |
| Evening, Night | 18:00~06:00 | Dark image with no sun |

The background can be set on the character house setting screen. FIG. 6 shows the background images that can be selected for the background. The background images can be used for the animated background in which background images are changed in accordance with the time period or can be used for a fixed background. That is, the background images can be used for the animated background of the character house or can be used for the fixed background of the character house. Each background image can be used for the animated background by only changing the brightness of the background image for expressing the time periods.

How to present the information of the character house and items 250 is explained hereinafter. The character house can present information on items showing the system information and the quotients of the character, as well as the character 230 and the background 240.

First, how to present the character quotient module is explained and then how to present the item 250 is explained.

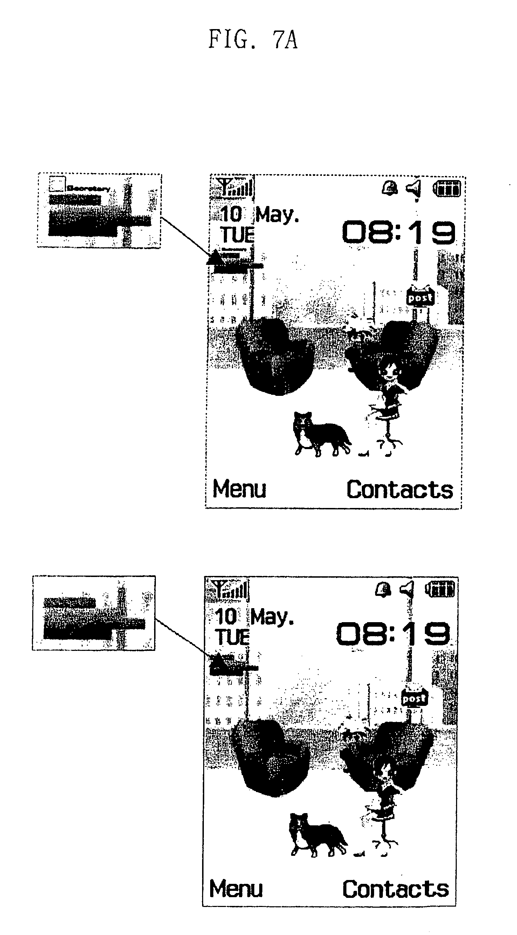

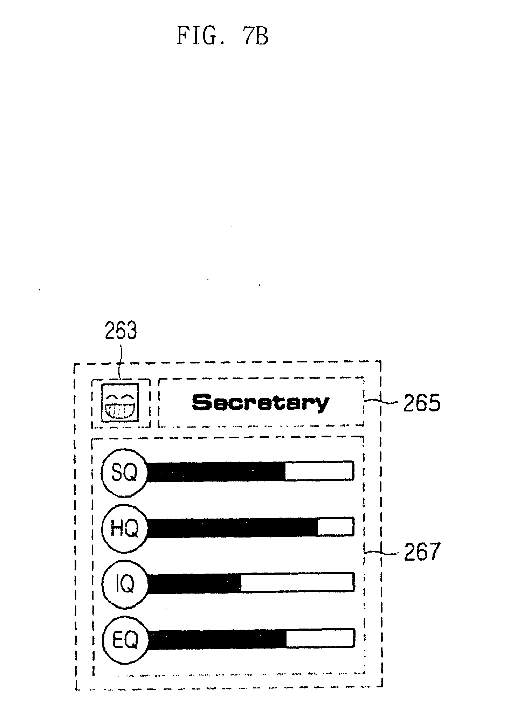

FIG. 7a is screen image illustrating a character quotient module on the idle mode screen in a screen image presentation technique according to an exemplary embodiment of the present invention, and FIG. 7b is an enlarged view illustrating the character quotient module of FIG. 7a.

Referring to FIG. 7a, the character quotient module 260 notifies the current status of the character 230 and can be presented in various manners. In this embodiment, the character quotient module 260 shows the state and emotion of the character 230 with the HQ, EQ, IQ, and SQ status gauges. Since the state and emotion of the character are presented with the quotient status gauges, the character can attract the user's interest.

The character quotient module 260 can be presented at a preset position in the character house. In this embodiment, the character quotient module is presented at the top left area of the screen, as shown in FIG. 7a. The character quotient module 260 can be set to be visible or invisible according to a user selection.

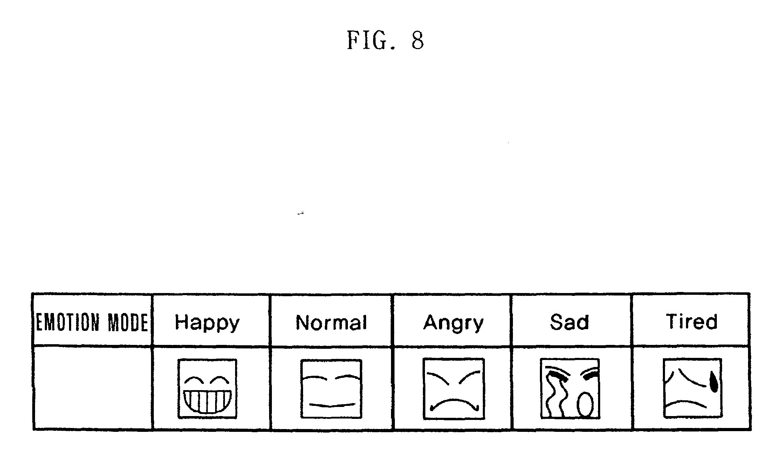

Referring to FIG. 7b, the character quotient module 260 includes a quotient information display region 267, an emotion icon display region 263, and a status display region 265. The emotion icon display region 263 can be implemented to display emoticons representing the emotions of the character, the status display region 265 presents the status of the character in text, and the quotient information display region 267 displays the levels of the quotients with color bars (gauge). The emotions that can be presented in the emotion icon display region 263 includes "happy," "normal," "angry," "sad," and "tired, " and the emotions are linked to corresponding images in the form of a table as shown in FIG. 8. Accordingly, when implementing the character house, the emotion of the character can be presented by the emoticon of the character quotient module corresponding to the current emotion of the character in addition with the character animations. The status information of the character can be presented at the status display region 265 in the form of a text. Each character can have various statuses that can be expressed in the form of a text. The character quotient information is displayed in the form of gauges in the quotient information display region 267. In this embodiment, four quotients, i.e., HQ, EQ, IQ, and SQ are measured and presented in the quotient information display region 267. In order to distinguish the quotients from each other, the quotients are presented by means of colored gauges, i.e. a red gauge for SQ, a green gauge for HQ, a purple gauge for IQ, a blue gauge for EQ, as shown in FIG. 7b. Each gauge presents the level of the quotient in percentage (%) without text based notification. The emotion icon display region 263 and a status display region 265 can be deleted.

Now, how to present the item 250 is explained hereinafter.

The items and expressions such as the greetings can be bought in an item shop on the web or received as a gift. The items that can be presented in the character house includes the function items, decoration items, and motion items. The positions of the items on the screen can be set in the character house setting screen. How to present the items is explained in an order of the function item, motion item, and decoration item.

The function items means items for providing specific system information of the mobile phone. In this embodiment, the function items include a memory monitor item, an alarm item, and a mailbox item. Of course, additional function items can be added when required. The mailbox item can be a message item, which is used to explain the function item.

The function items can be implemented for a signal function or can be an item grouping the function items having similar functions. As a group-wise function item, the mailbox item can present all kind of the messages. In this case, the function item integrates a short message service (SMS) item, an email message service (EMS) item, and a multimedia message service (MMS) item. In the case of the alarm item, it can integrate a schedule item, a memo item, alarm generation item, etc. If such a multifunction item is selected, the controller 110 can display the function items integrated in the multifunction item such that the user can select one of the items.

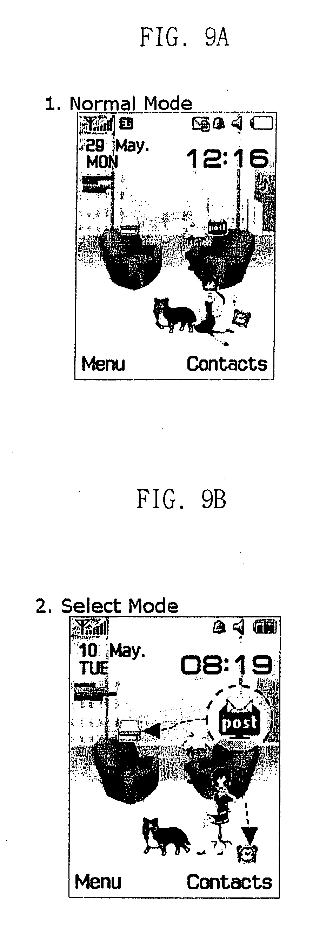

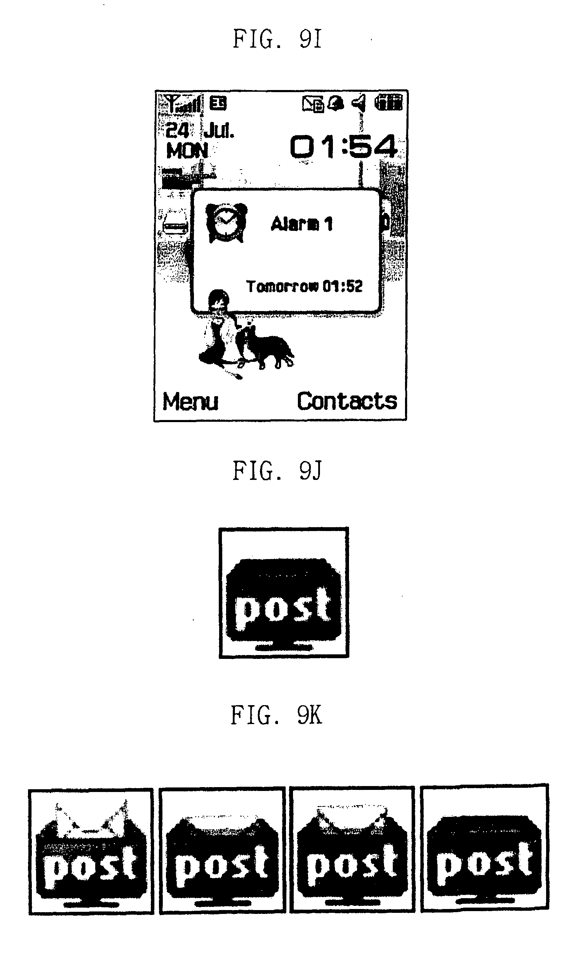

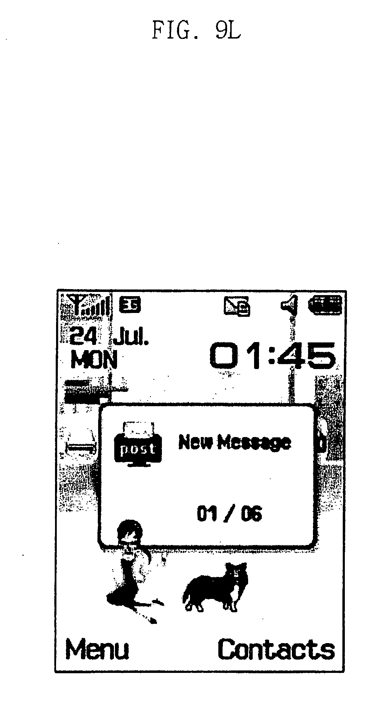

### FIGs. 9a to 9l are views illustrating how to present function items in a screen image presentation technique according to an exemplary embodiment of the present invention.

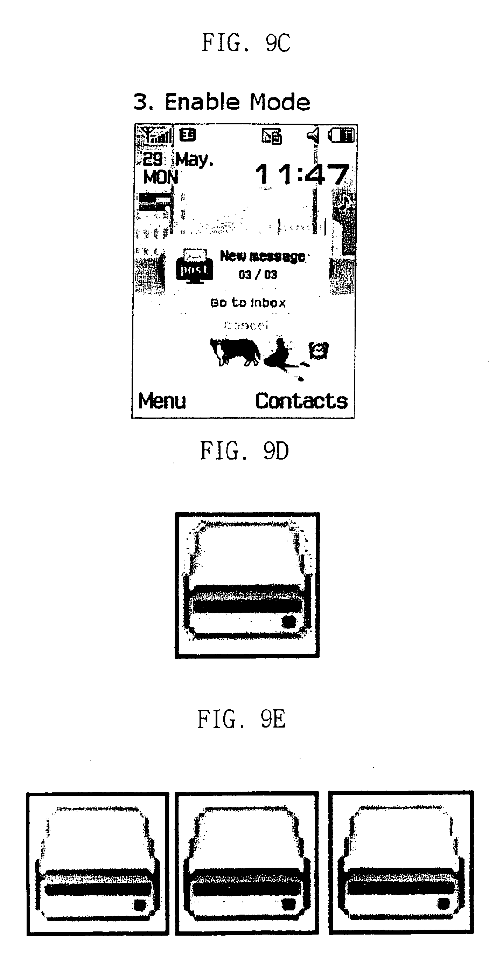

The functional item can be displayed in a normal mode (see FIG. 9a), a selection mode (see FIG. 9b), and an enable mode (see FIG. 9c). How to present the function item having a single function is described with reference to FIGs. 9a to 9c.

Referring to FIG. 9a, when the function items are presented with the character house, the function items are arranged at the preset positions on the screen. In FIG. 9a, the mailbox item, the clock item, and the memory monitor item are examples displayed on the screen. In the normal mode, the function items are displayed as basic item images. If an event occurs while the function items are displayed in the normal mode, the basic item image of the function item related to the event is animated. In the normal mode, if an item display mode key (a special key such as "clear key" provided to the mobile phone) is input, the mobile phone enters a selection mode for displaying the function item information.

Referring to FIG. 9b, the function items are displayed with semitransparent layer in the selection mode, and the selected item is zoomed in to be displayed in an enlarged form. In the selection mode, other function items can be selected by keypad manipulation. If an OK key is input while an item is selected, the item is activated in the enable mode.

Referring to FIG. 9c, upon entering the enable mode, the item image of the selected function item is displayed together with the information on the selected function item. By manipulating the up/down direction keys provided in the keypad unit, it is possible to navigate to other applets or return to the normal mode shown in FIG. 9a. Left/right direction keys allow navigating to and activating other function items.

A structure and presentation of a function item are described with the memory monitor item as an example hereinafter with reference to FIGs. 9d to 9f.

The memory monitor item is a function item for display memory utilization information. FIG. 9d shows a memory monitor item image in the normal mode. If the memory usage is over 50% in the normal mode, the memory monitor item is animated as shown in FIG. 9e. If the memory monitor item is selected by the keypad manipulation, the memory monitor item is displayed on the screen in the form of an enlarged memory monitor item image presenting the memory utilization with a text and gauge. The memory utilization information is displayed in the text form of a used memory/total memory. Also, the memory utilization information is presented with a colored bar of the gauge. The gauge bar can be placed in left or right side of the memory monitor item according the position of the memory monitor item on the screen and changed in color (for example, red) if the memory utilization percentage becomes over a predetermined percentage (for example, 95%). If a "go to memory status" command is input through a menu screen, a detailed memory utilization screen is displayed for informing the usage of the memory.

A structure and presentation of a function item are described with the clock item as an example hereinafter with reference to FIGs. 9g to 9i.

The clock item is a function item for alarming at preset times. FIG. 9g shows the clock item image in the normal mode. If a preset time has arrived, the clock item is animated as shown in FIG. 9h. If the clock item is selected by the keypad manipulation, the clock item is presented on the screen in the form of an enlarged clock item image with the present time. The preset time can be presented in the form of a text and image. The preset time can be of "morning call, " "schedule," "to do," functions. The text can be presented in various formats. For example, a text format 1 can be used for a title of the schedule and a text format 2 for date and time. If the schedule title is not set, a default text "no title" is presented. In the text format, the time is presented in the form of TT/MM, and the date is presented in the form of today/tomorrow/a day of the week. The text can be positioned at a left or right side of the clock item according to the position of the clock item on the screen. If multiple schedules are preset, the most closely arranged schedule is shown. If a "go to alarm status" command is input through a menu screen, a detailed schedule screen is displayed for informing preset alarm schedule details.

A structure and presentation of a function item are described with the mailbox item as an example hereinafter with reference to FIGs. 9j to 91.

The mailbox item is a function item for informing the number of the unread messages among the received messages. FIG. 9j shows the mailbox item image in the normal mode. If a message is received in the normal mode, the mailbox item is animated as shown in FIG. 9k. If the mailbox item is selected by the keypad manipulation, the mailbox item is presented on the screen in the form of an enlarged mailbox image with the information on the received and unread messages. The information on the received and unread messages can be presented with a text and image. The text can be presented

The text can be presented in various formats. For example, a text format 1 can be used for a category of the information (in this case, New Message), and a text format 2 for the numbers of the messages in the form of "new message/total message." The text can be positioned at a left or right side of the mailbox item according to the position of the mailbox item on the screen. If a "go to inbox" command is input through a menu screen, a message list screen is displayed for showing the received messages.

The motion items are items for making dynamic the screen presentation of the character house. The motion items move around on the screen according to movement lines by item.

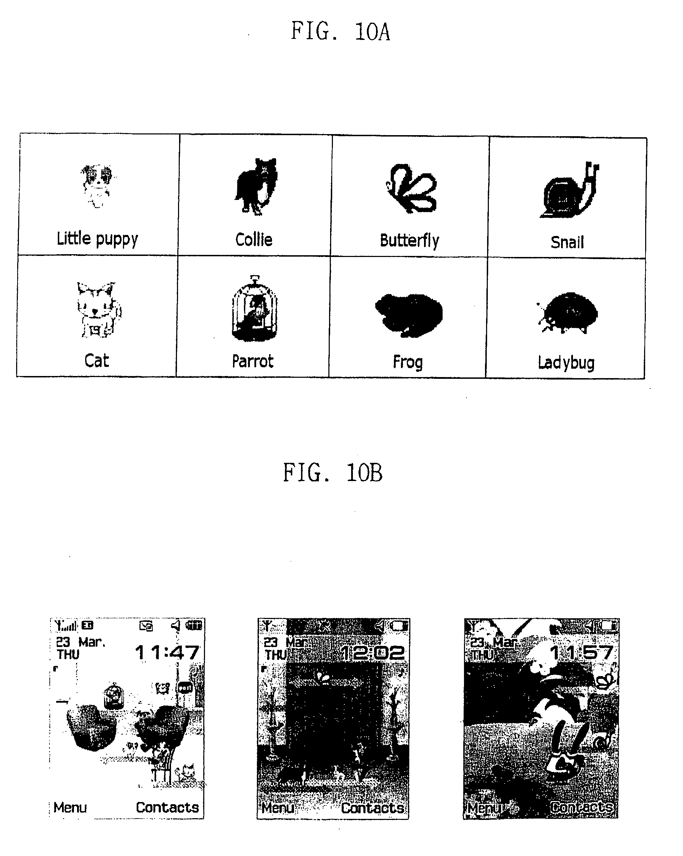

FIGs. 10a to 10c are views illustrating steps of presenting motion items in a screen image presentation technique according to an exemplary embodiment of the present invention.

Referring to FIGs. 10a to 10c, the motion items of the character house include animals and movable objects as shown in FIG. 10a. Each motion item moves in accordance with a unique movement line and at a preset animation time.

The motion items are animated on the basis of the position information contained in the character house information such that each motion item starts moving at the preset time along the preset movement line as shown in FIG. 10b. The motion item can be configured to move at a random speed and turn the progress direction in random probability.

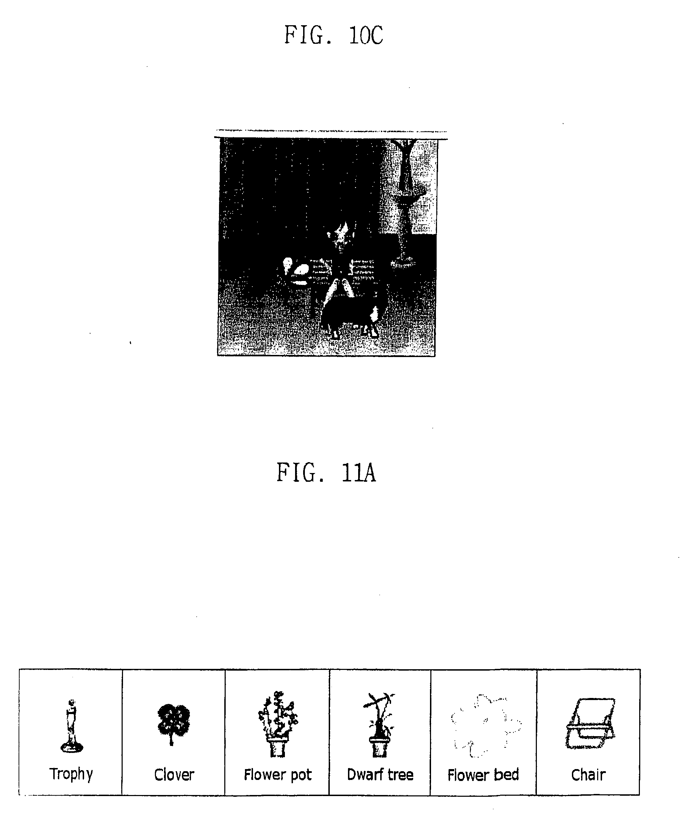

As shown in FIG. 10c, when moving across each other, the motion items are overlapped. In such case, the motion items are shown in an order of the presentation priorities (depth) that are preset for the respective items. That is, all the motion items are assigned presentation priorities such that the motion item having the highest priority is presented when at least two motion items are overlapped while on the move. Some motion items have higher priorities than that of the character, and others have lower priorities. In FIG. 10c, the motion item "collie" (a dog) has a priority higher than the character such that the legs of the character are covered by the collie. Also, a special motion item (in FIG. 10a, a butterfly) is assigned the highest priority such that it always appears on the character and other items.

As described above, the motion items are animated to move at a speed (for example, 5 pixels/sec) so as to disappear out of the character house (cross the border of the screen) and then appear after a while. If a motion item encounters the character or other item while moving along the movement line, the motion item or the character having a higher priority is displayed on top. If a motion item having a priority lower than that of the character passes across the character, the motion item is shaded by the character.

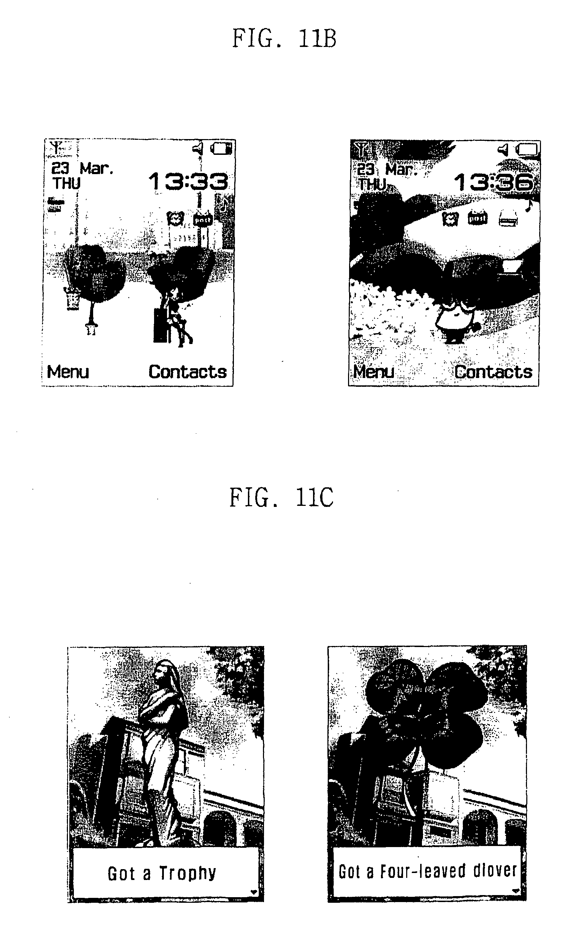

The decoration items are objects for decorating the character house such that the decoration items have no special functions. FIGs. 11a to 11c are views illustrating steps of presenting decoration items in a screen image presentation technique according to an exemplary embodiment of the present invention. FIG. 11a shows exemplary decoration items that can be presented for decorating the character house, FIG. 11b shows exemplary character houses decorated with the decoration items, and FIG. 11c shows specific decoration items shown in an enlarged form on the screen.

Referring to FIGs. 11a to 11c, the decoration items to be applied for the character house include flowers, furniture, and other ornamental things. Such decoration items can be presented with the character in the character house as shown in FIG. 11b. Some decoration items have special meanings. The special decoration items such as a trophy and a clover shown in FIG. 11c are obtained as a reward for winning a game or achievement of a specific state of the mobile phone, but bought in cash. The decoration item "trophy" is used for informing a number of wins of the game, such that every wins of games may change the trophy in color and type and increases the number of the trophies.

Until now, how to present the character 230, the background 240, the items, and the character quotient module 260 is explained. Here, the character quotient module 260 can be selectively set to be visible or invisible. All the elements constituting the character house are presented in association with the character house. The character house also can be set to differently operate at a specific time or situation. For example, the character house can be configured such that the character gives greetings at specific times or when a specific event occurs.

In the case of the greeting behavior is set, the character gives the user greetings at the preset times and an item or character money can be given as a reward for the behavior.

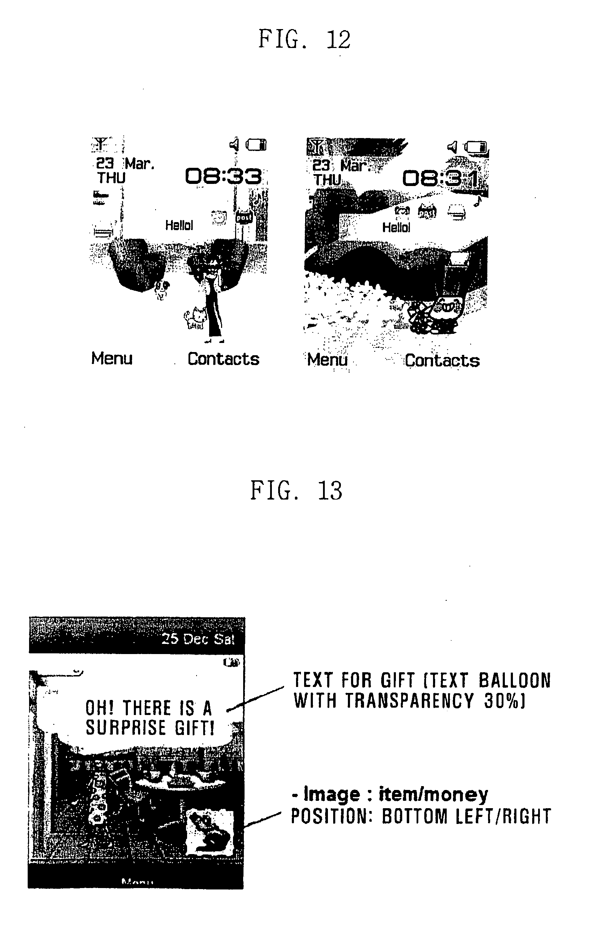

FIG. 12 shows screen images illustrating character behaviors in the screen image presentation technique according to an exemplary embodiment of the present invention. As shown in FIG. 12, when the character greets at a specific time, the greeting expression is displayed in the form of a text balloon, the greeting expression changes according to the time periods of the day.

The greeting behavior of the character can be configured such that the character greets at predetermined times a day (in this embodiment, 4 times a day). If it is determined that the character greets 4 times a day, 4 greeting time zones are configured: morning (08:30~09:30), afternoon (12:00~13:30), evening (17:30~18:30), and night (23:30~00:30). Accordingly, the character greets once at each greeting time zone. If the mobile phone is off or in character house disabled modes at each greeting time zone, the greeting behavior is disabled. That is, the mobile phone is not in the idle mode where the character house screen is presented (for example, when a clam shell type phone is unfolded or a slide type phone is slid open), the greeting behavior function is disabled. When the greeting behavior starts, the greeting behavior remains during a predetermined time period (for example, 10 seconds). If a specific event (for example, an incoming call or a key input for activating a specific function) occurs while the character greets, it is regarded that the greeting is performed if the greeting behavior is maintained over predetermined time (for example, 3 seconds). If the greeting behavior stops before elapsing 3 seconds and the character house is activated at the greeting times zone, the greeting behavior starts again. The character is preferably associated with different greeting behaviors for the respective greeting time zones as in table 2.

**Table 2**

| Class | Time Zone | Text |
|---|---|---|
| Morning | 08:30~09:30 | Hello! |
| Afternoon | 12:30~13:30 | Good ~ |
| Evening | 17:30~18:30 | Bye ~ |
| Night | 23:30~00:30 | See U ~ |

When the greeting behavior starts, the mobile phone can generate an event. The event may occur in a probability set according to the times of the greeting behaviors. In this embodiment, the probability is about 10%. If the event does not occur during the greeting time zone (that is, the mobile phone is off during the greeting time zone or the character house is not activated), the event become invalid.

FIG. 13 is a screen image illustrating a character animation with an event in screen image presentation technique according to an exemplary embodiment of the present invention.

Referring to FIG. 13, if the character animation starts, a text is presented in the form of a text balloon. The text expression as an even is presented in the text balloon. The text balloon displayed with a 30% transparency. The text balloon for expressing the event can be presented together with an image. In this embodiment, since a gift event text is presented with a gift image as shown in FIG. 13. The gift image is preferably presented at a bottom left or bottom light portion of the screen. The gift event can be replaced by money or other item event.

The items and background are selected and arranged on the screen for decorating the character house.

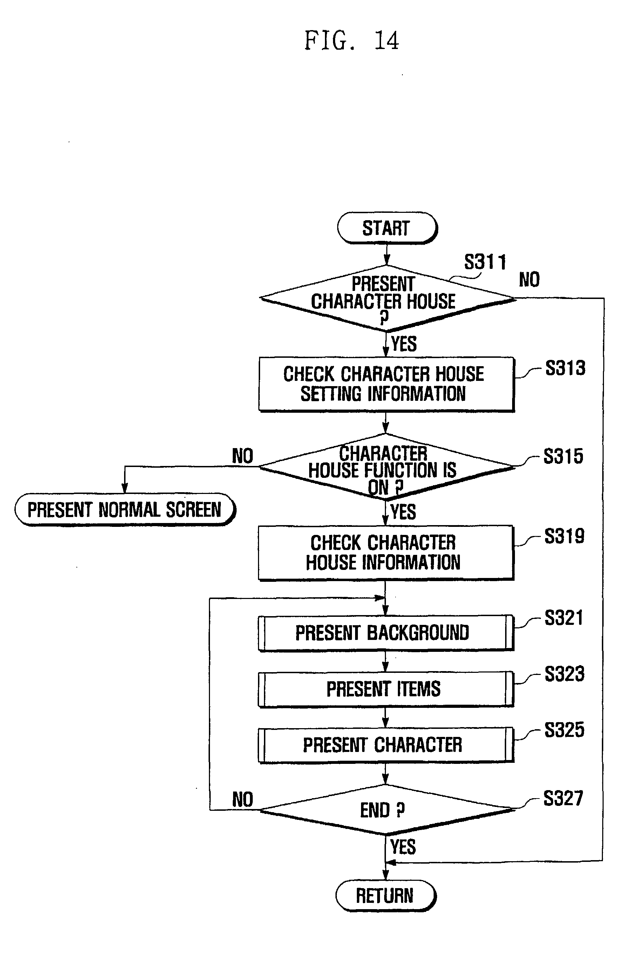

FIG. 14 is a flowchart illustrating a character house presentation procedure of a screen image presentation method according to an exemplary embodiment of the present invention.

Referring to FIG. 14, the controller 110 controls the operations of the mobile phone and determines whether the mobile phone enters a character house presentation mode (S311). If the mobile phone enters the character house presentation mode, the controller checks the character house configuration information (S313). The character house presentation mode can be identical with the idle mode of the mobile phone. In the idle mode, the controller 110 displays the character house on the screen of the display unit 143 during a predetermined display period. If the display period ends, the controller 110 turns off the display unit 143 for saving power. If a clam shell or a slide of the mobile phone is open in the idle mode, the controller 110 turns on the display unit 143. The character house configuration information includes a parameters configured using a setting application. The parameters may include information for activating or deactivating the character house function. The character house configuration information may include character house on/off information, character information display on/off information. If the character house configuration information includes the character house function related information, the controller 110 determines whether the character house function is turned on (S315). If it is determined that the character house function is turned off, the controller 110 displays a normal idle mode screen.

If it is determined that the character house function is turned on, the controller 110 checks the character house information (S319). The character house information is on the currently set character house. The character house information includes the information on the background and items associated with the character house. The background information includes a background image ID, and the item information includes item IDs and positions of the items on the screen (X, Y coordinate). The character house can be displayed with one or more items, and the items are arranges in an order of the presentation priorities such that if two items are overlapped, the item having a higher priority is displayed on the other item. By checking the character house information, the controller 110 recognizes the background and items with their positions on the screen of the display unit 143.

After checking the character house information, the controller 110 controls to present the background, items, and character (S321, S323, and S325). In FIG. 14, the character house presentation is performed in the order of the background, items, and character. However, the presentation order of the elements can be changed. For example, the elements of the character house can be presented in an order of the background, character, and items; an order of the character, background, and items; and an order of the character, items, and background. That is, the character house presentation can be performed in various orders. Through the steps S321 to S325, the character house presentation is completed.

While presenting the character house, the mobile phone determines whether an event (for example, a function is selected by a key input) occurs or a predetermined display time ends (S327). If an event occurs or the display time ends, the controller 110 ends the presentation of the character house and then performs the selected function or turns off the display unit. Also, it is possible to perform the selected function while maintaining the character house screen. For example, if a message is received while the character house is displayed or a message transmission mode is activated, the controller 110 can maintain the presentation of the character while reading the received message and writing a message to transmit. That is, the controller 110 displays a message received or to be transmitted in a transparent message window on the character house screen. Also, the controller 110 can increase the transparency of the character house presentation and display the message on the character house presentation. Of course, other events can be processed while the character house is presented in the similar manner.

The character house element presentation procedure (S321, S323, and S325) are described hereinafter in more detail.

First, how to present the background of the character house is described in detail.

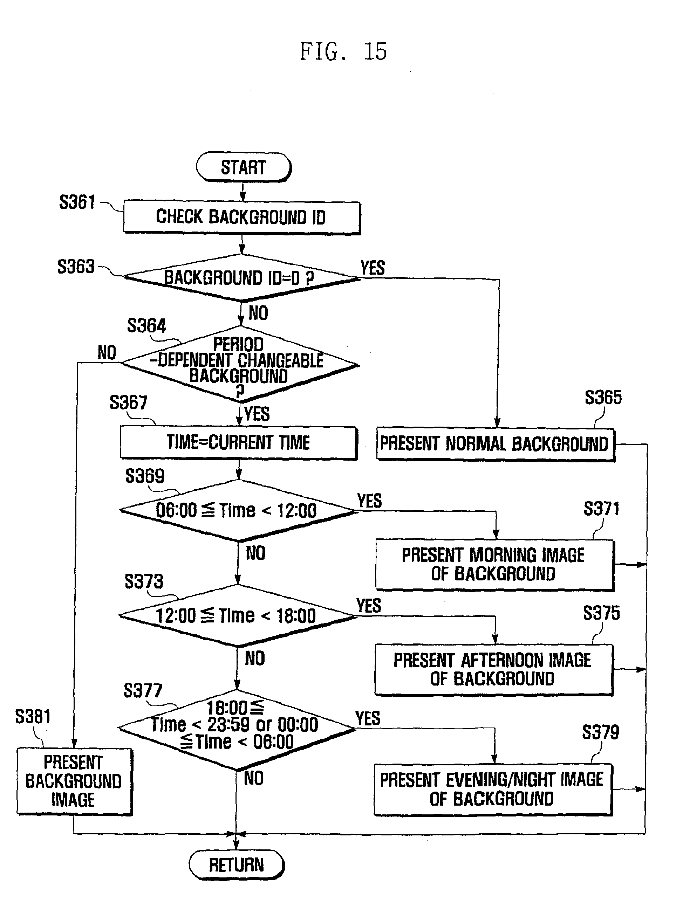

FIG. 15 is a flowchart illustrating the background presentation procedure of FIG. 14. Referring to FIG. 15, the controller 110 checks a background ID of the character house (S361), and determines whether the background ID is 0 (S363). The background ID "0" means the character house does not use any background image. If the background ID is 0, the controller 110 loads a normal background image set as a default image (S365). If the default background image is not set, no background image is presented.
If the background ID is not 0, the controller 110 retrieves a background corresponding to the background ID and presents the retrieved background on the screen. In this case, the controller 110 selects one of the backgrounds as shown in FIG. 6 on the basis of the background ID.

The background of the character house can be represented by multiple images that are presented at different time periods. Of course the background of the character house can be represented by a fixed single image.

Accordingly, after retrieving the background, the controller 110 determines whether the retrieved background is a multiple image background (S364). If the retrieved background is a multiple image background, the controller checks the current time (S367) and determines the current time is greater than or equal to 06:00 and less that 12:00 (S369) . If the current time is greater than or equal to 06:00 and less than 12:00, the controller 110 selects a morning image assigned for the morning or forenoon from the multiple image background and then displayed the morning image on the screen (S371). If the current time is not greater than or equal to 06:00 or not less than 12:00, the controller 110 determines whether the current time is greater than or equal to 12:00 and less than 18:00 (S373). If the current time is greater than or equal to 12:00 and less than 18:00, the controller 110 selects an afternoon image assigned for the afternoon from the multiple image background and then displays the afternoon image on the screen (S375). If the current time is not greater than or equal to 12:00 or not less than 18:00, the controller 110 determines whether the current time is greater than or equal to 18: 00 and less than 23:59, or greater than or equal to 00:00 or less than 06:00 (S377) . If the current time is greater than or equal to 18:00 and less than 23:59, or greater than or equal to 00:00 or less than 06:00, the controller 110 selects an evening or night image assigned for the evening or night from the multiple image background and displays the evening or night image on the screen (S379). At step S364, the retrieved background is not a multiple image background, the controller regards the retrieved image as a fixed single image background and displays the fixed signal image as the background (S381).

In the case of using the multiple image background, a signal fixed image can be used by changing the brightness of the image for the respective time periods of a day.

Second, how to present the items of the character house is described in detail.

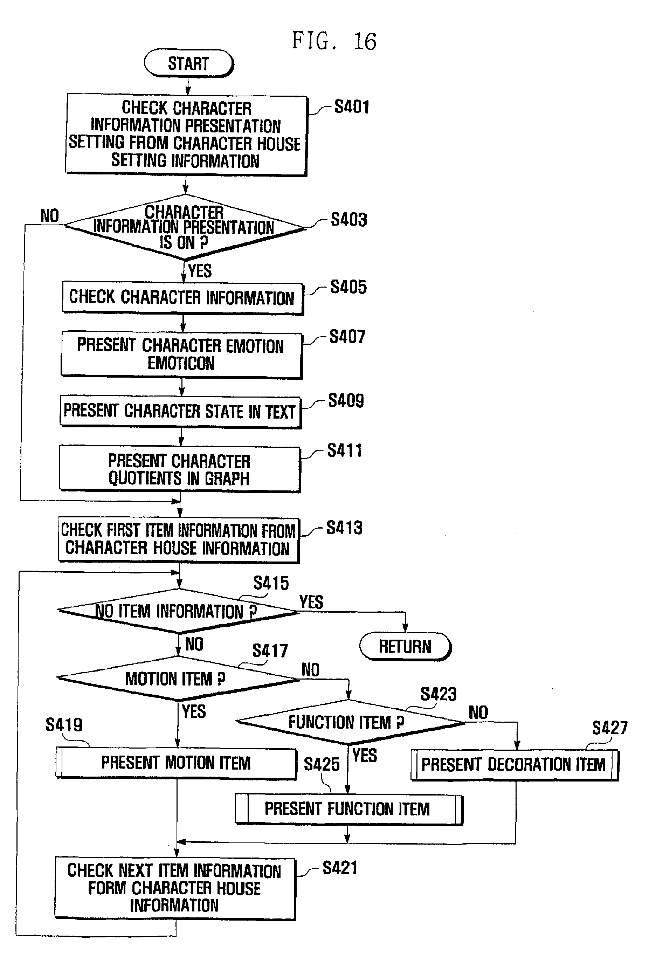

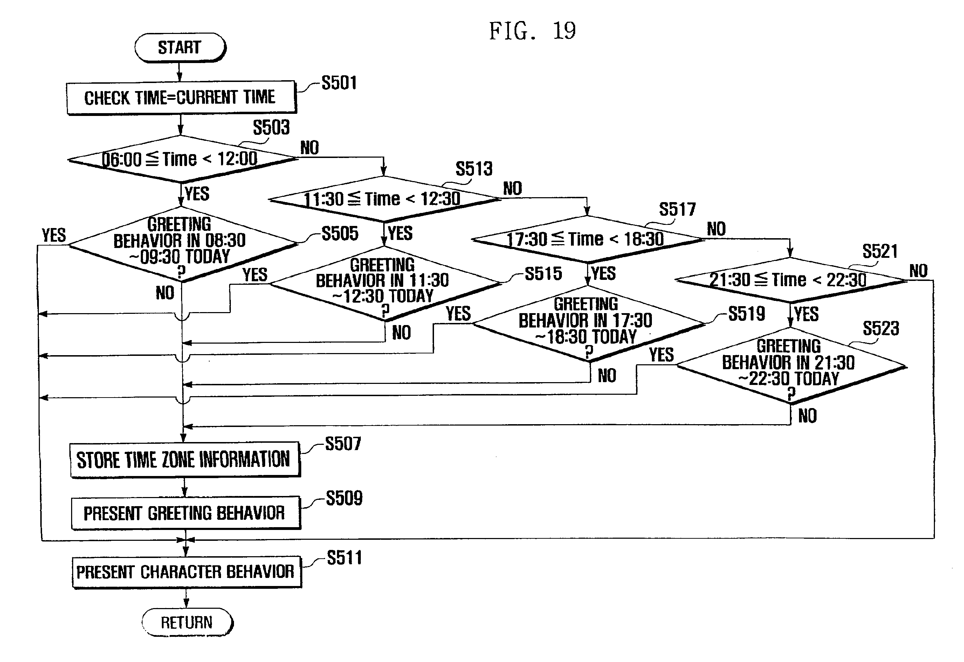

FIG. 16 is a flowchart illustrating the item presentation procedure of FIG. 14. The item presentation procedure of FIG. 16 is described with the character information presentation of FIG. 7b. However, the character information presentation can be performed with the background presentation procedure, or the character presentation procedure of FIG. 19.

In this embodiment, it is assumed that the character information presentation is included in the item presentation procedure as shown in FIG. 16. The emoticons for expressing the emotion of the character, texts for expressing the state of the character, and the character quotients, shown in FIG. 7b, included in the character information are explained. The explanation of the emoticons and the text may be skipped.

Referring to FIG. 16, the controller 110 checks character house configuration information includes information on a character quotient presentation function (S401) and determines whether the character information presentation function is on (S403). If the character information presentation function is on, the controller 110 checks the character quotient information (S405) and presents a character emoticon on the basis of the character quotient information in the emotion icon display region 263 of FIG. 7b (S407). The emotion of the character can be represented by 5 emotion modes: happy, normal, angry, sad, and tired. The emoticon to be displayed in the emotion icon display region 263 can be one of the emoticons corresponding to the emotion modes, as shown in FIG. 8. After presenting the emoticon, the controller 110 presents a text corresponding to the current state of the character in the status display region 265 of FIG. 7b (S409) and then presents the character quotients (SQ, HQ, IQ, and EQ) in the quotient information display region 267 of FIG. 7b in the form of bar graphs (S411). The values of character quotients are presented as different colored bars. As mentioned above, if the character information presentation function is enabled, the controller 110 checks the character quotients and determines the emotion mode on the basis of the character quotients. If the emotion mode is determined, the controller 110 presents an emoticon corresponding to the emotion mode, a text appropriate for the state of the character, and the quotients in the form of the bar graphs.

The character information based on the character quotients can be presented at a fixed position in the character house (for example, a top left portion) as shown in FIG. 7a in the form of FIG. 7b. The character quotient information cannot be presented according to the user's configuration. That is, whether to present the character information is decided by the user. If the user does not activate the character information presentation function, the controller recognizes the configuration at step S403 such that the steps S405 to S411 are skipped. In this case, the character information based on the character quotients information shown in FIG. 7b is not presented.

After presenting the character quotients, the controller checks the information on an item having a lowest priority (depth) (S413). The item information includes an item ID and display position. The item can be one of the motion items, function items, and decoration items. In some case, two or more items can be overlapped. The items are presented in an order of the presentation priorities assigned to the items such that the item having a lowest priority is firstly presented. That is, when two or more items are overlapped, only the item having the highest priority is completely presented. If the item on top is disabled, the item having the second highest priority is presented.

Accordingly, after checking the item information, the controller 110 determines whether the item information exists (S415). If the iteminformationexists, the controller 110 determines whether the item is a motion item on the basis of the item information (S417). If the item is a motion item, the controller 110 present the motion item (S419) and checks another item having the next lowest priority (S421). If it is determined that the item is not a motion item at step S417, the controller 110 determines whether the item is a function item (S423). If it is determined that the item is a function item, the controller 110 presents the function item (S425). If the item is not a function item, the controller 110 presents the item as a decoration item (S427).

The item presentation is performed in a different manner according to the type of the item. That is, the motion item, function item, and decoration item are presented in different procedures.

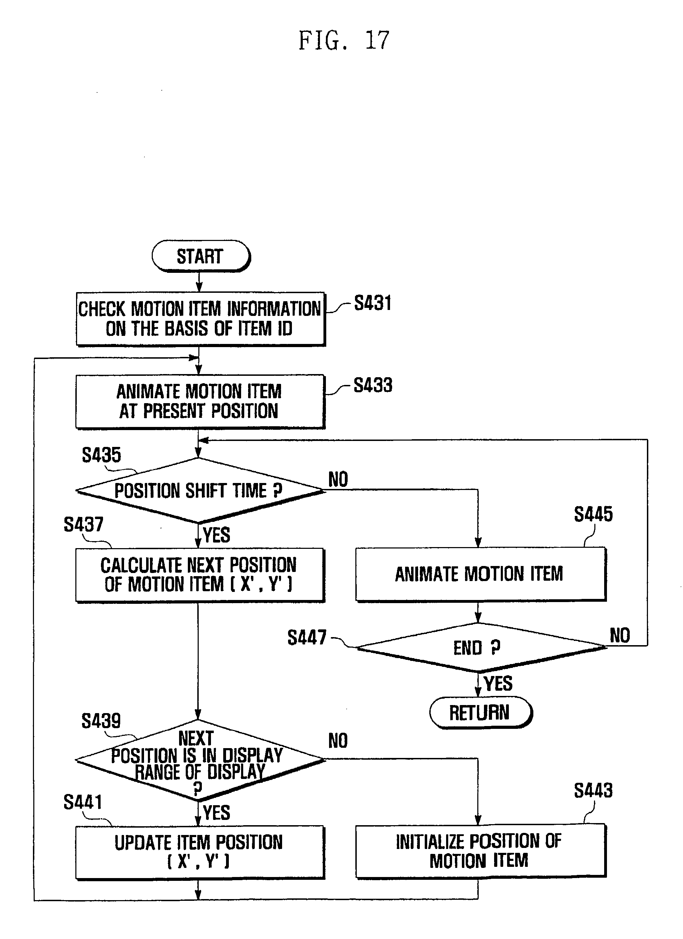

FIG. 17 is a flowchart illustrating a procedure for presenting a motion item in the screen image presentation technique according to an exemplary embodiment of the present invention.

Referring to FIG. 17, the controller 110 checks the motion item information on the basis of the item ID (SS431). The motion item information includes an item ID, a sojourn time for staying the item at the initial position, a coordinate represented by a horizontal distance (X axis distance) for moving the item to the next position and a vertical distance (Y axis distance) for moving the item to the next position, and initial position information. The initial position information contains one of 8 coordinates listed in table 3. It is assumed that the motion item starts moving from an edge of the screen as the initial position (i.e. 4 sides and 4 corners of the screen of the display unit 143) in table 3. The motion item also can be configured to start moving at a random position in the screen of the display unit 143.

**Table 3**

| | |
|---|---|
| 1. | (X=0) |
| 2. | (X=LCD_X_MAX) |
| 3. | (Y=0) |
| 4. | (Y=LCD_Y_MAX) |
| 5. | (X=0, Y=0) |
| 6. | (X=0, Y=LCD_Y_MAX) |
| 7. | (X=LCD_X_MAX, Y=0) |
| 8. | (X=LCD_X_MAX, Y=LCD_Y_MAX) |

After checking the motion item information, the controller 110 obtains the initial position of the motion item so as to animate the motion item at the initial position (S433). The animation maintains before ending the sojourn time and then the motion item is positioned at the next position through the steps S435 to S445. After animating the motion item, the controller 110 determines whether the sojourn time expires (S435). If the sojourn time is expired, the controller 110 calculates a coordinate of the next position to which the motion item moves (S437). After calculating the next position coordinate, the controller 110 determines whether the calculated next position is in a available display range on the screen of the display unit 143 (S439). If the calculated next position is in the available display range, the controller 110 moves the motion item to the next position (S441) and then returns to step S433 to animate the motion item at the next position. At step S439, if the calculated next position is not in the available display range, the controller 110 determines that the movement of the motion item is completed and moves positions the motion item at the initial position (S443) and repeats the step S433.

As described above, the motion item is configured with one of initial positions as shown in table 3 and moves to a predetermined coordinate on the screen after predetermined time. The motion item is animated at the initial position, moved to the next position after the sojourn time, and then animated again, under the control of the controller 110. The movement time is determined on the basis of the sojourn time and a distance between the two positions. If the sojourn time is short and the distance between the two positions is close, the motion item moves fast. On the other hand, if the sojourn time is long and the distance between the two positions is far from each other, the motion item moves slowly. Of course, the movement direction of the motion item depends on the relationship of the two positions (coordinate in the screen). The motion item can move in horizontal, vertical and diagonal directions and can be determined in consideration of the distance between the two positions. The motion item can be one of the items depicted in FIG. 10 and move in the manner shown in FIG. 10b. The motion items move on the screen as shown in FIG. 10b in accordance with the procedure of FIG. 17.

The movement of the motion item stops at the time when the character house presentation ends, but, can be set to stop at a time different from the character house presentation end time. That is, the motion item presentation time can be shorter than the character house presentation time. In this case, the motion item disappears before the character house presentation stops.

Accordingly, if the sojourn time is not expired at step S435, the controller 110 maintains the animation of the motion item (S445) and determines whether the motion item presentation time is ended, (S447). If the motion presentation time is ended, the controller stops presentation of the motion, and otherwise, repeats the step S435.

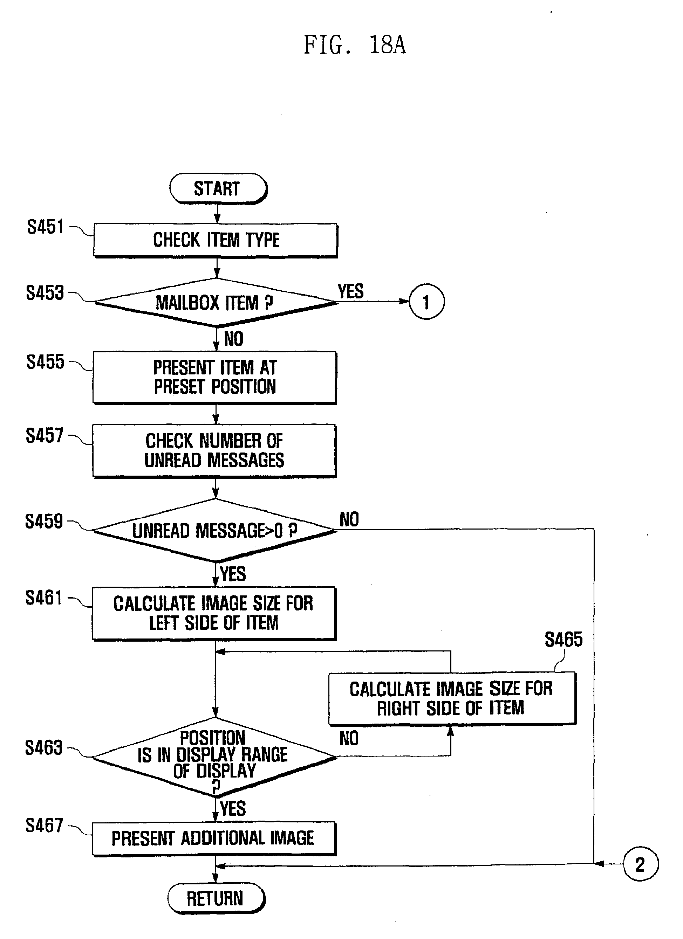

FIGs. 18a to 18d are flowcharts illustrating a procedure for presenting function items in the screen image presentation technique according to an exemplary embodiment of the present invention.

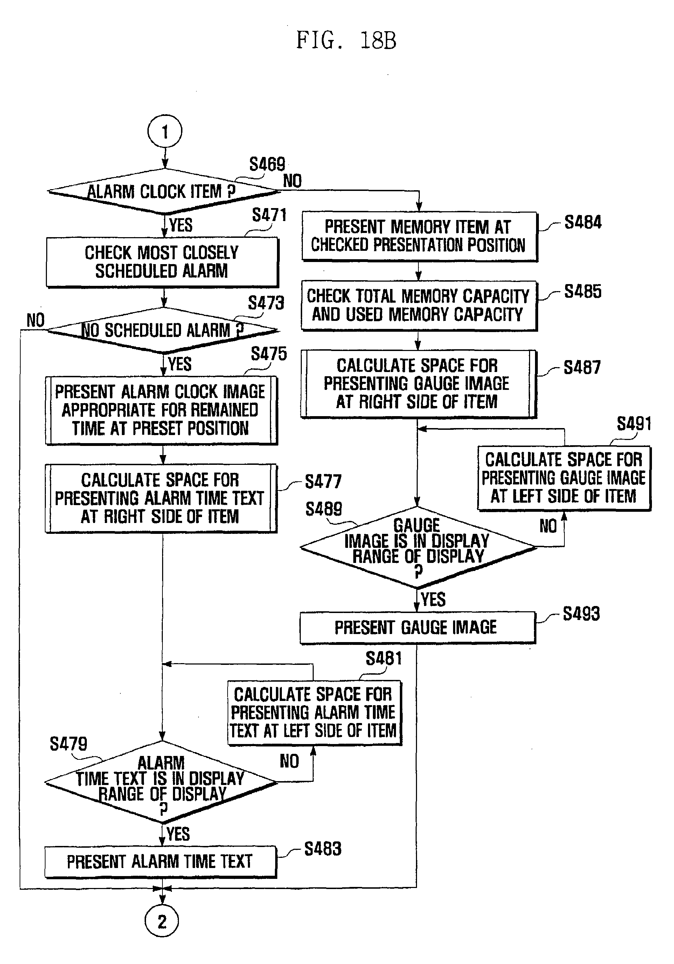

Referring to FIGs. 18a and 18b, the controller 110 checks a kind of the function item (S452). In this exemplary embodiment, it is assumed that there are three function items: mailbox item, alarm clock item, and memory monitor item. Of course, the number and kind of the functions items can be changed.

After the function item is checked, the controller 110 determines whether the function item is a mailbox item (S453). If the function item is the mailbox item, the controller checks a presentation position of the mailbox item and presents mailbox item at the presentation position on the screen (S455). Next, the controller 110 checks a number ofreceivedbutunreadmessages (S457) anddetermineswhether the number of unread messages are greater than 0 (S459). If the number of the unread messages is not greater than 0, the controller presents an empty mailbox image.

If the number of the unread messages is greater than 0, the controller 110 displays the number of the unread messages with the mailbox image (S461 to S467). The number of the unread messages can be presented in various manners. For example, the number of unread messages can be displayed on the mailbox image. Also, the number of unread messages can be displayed by means of a text balloon. In this case, the text balloon has a shape of a postcard with the number of the unread messages. In this embodiment, the mailbox item presentation is explained with the text balloon image for displaying the number of the unread messages.

According to the position of the mailbox item, the controller 110 determines an unread message number presentation position. The controller 110 checks the left and right side spaces of the mailbox items and arranges the text balloon at the left or right side. If it is determined that the text balloon is arranged at the right side, the controller 110 determines whether the text balloon presentation position is in the available display range of the screen (S463) . If the text balloon presentation position is in the available display range, the controller 110 presents the text balloon at the right side of the mail box (S467). If the text balloon presentation position is not in the available display range, the controller 110 determines to the text balloon at the left side of the mailbox item (S465) and repeats the step S463.

At step S453, if it is determined that the function item is not the mail box item, the controller determines whether the function item is an alarm clock item (S469) in FIG. 18b. If the function item is the alarm clock item, the controller 110 checks scheduled alarms on the basis of alarm information (S471). The alarm information includes the presentation position of the alarm clock item on the screen of the display unit 143. After checking the scheduled alarms, the controller determines whether the there is scheduled alarms (S473). If no alarm is scheduled, the controller 110 presents an empty alarm image. If there is at least one scheduled alarms, the controller 110 retrieves a next scheduled alarm and displays alarm clock image with the next scheduled alarm (S475). The alarm clock item can be implemented with a clock image. In this case, the alarm clock image may have the needles arranged for showing the scheduled alarm time.

Next, the controller 110 checks an alarm time presentation position and determines whether there is a space enough to present the alarm time at the right side of the alarm clock item in the screen. If there is a space enough to present the alarm time, the controller 110 presents the next scheduled alarm time at the right side of the alarm clock item (S477). If it is determined that there is no space enough to present the alarm time at the right side of the alarm clock item (S479), the controller 110 presents the alarm time at the left side of the alarm clock item (483). The alarm can be represented by a morning call, a meeting schedule, a reservation, etc. The scheduled alarms are activated at the scheduled times with the specific events. The alarm time can be shown in the form of YYYY/MM and HH/MM as a text. The alarm time text can be placed at the left or right side of the alarm clock item according to the position of the alarm clock item.

If two or more alarms are scheduled, the alarm time of the closest next alarm is presented. The alarm time can be presented by means of the alarm clock image. When the alarm time is presented by means of the alarm clock image. The alarm time text may not be presented.

If it is determined that the function item is not the alarm clock item at step S469, the controller 110 determines that the function is a memory item. Next, the controller 110 checks a presentation position of the memory item from the character house information and presents the memory item at checked presentation position (S484). After presenting the memory item on the screen, the controller 110 checks a total memory capacity and used memory capacity (S485) and then displays the information on the total memory capacity and the user memory capacity (S487 to S493). That is, after checking the memory information, the controller 110 checks which side of the memory item has space enough for presenting the memory information. If it is determined that the right side of the memory item has space enough for presenting the memory information, the controller 110 presents the memory information at the right side of the memory item. On the other hand, if it is determined that the right side of the memory item does not have space enough for presenting the memory information, the controller 110 presents the memory information at the left side of the memory item. The memory item may inform of the memory information of the memory unit 130 of FIG. 1 and the memory information can be shown in the form of a gauge bar. The gauge bar can be located at the left or right side according to the position of the memory item on the screen. The gauge bar shows the memory utilization and changes in red if the memory utilization becomes over 90%.

As describe above, a function item are presented in such a manner that the controller checks the presentation position of the function and presents the function item at the presentation position on the screen of the display unit 143 together with the function information obtained by the function item. The function information is presented in such a manner that the controller checks which side of the function item has a space enough for presenting the function information and then presents the function information at a left or right side of the function item, where space is enough. The function information can be shown as a text or a graphical gauge. When the function information is provided in the text, the graphical gauge can be used or not.

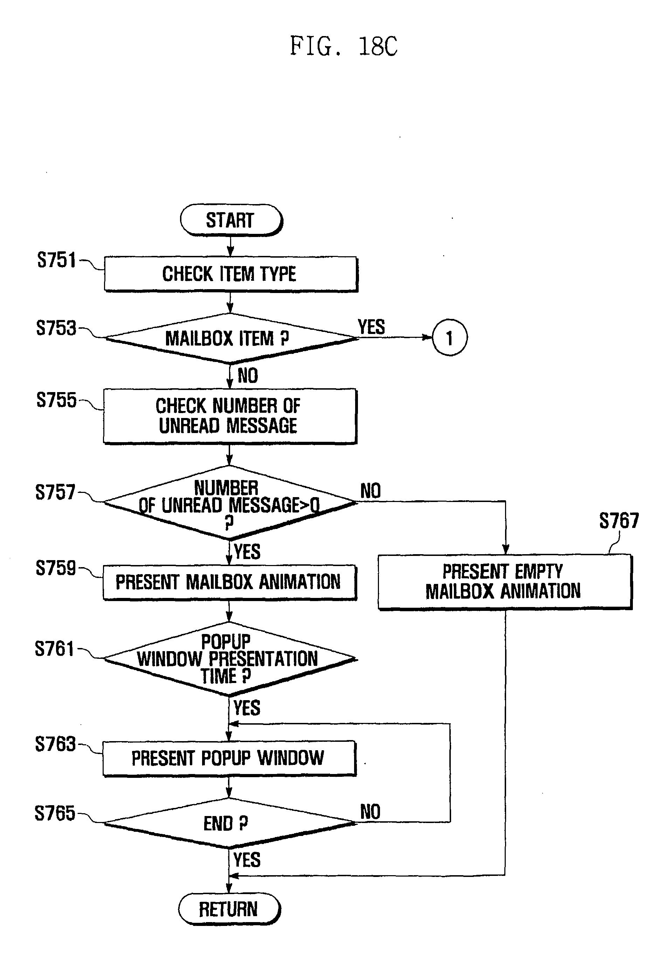

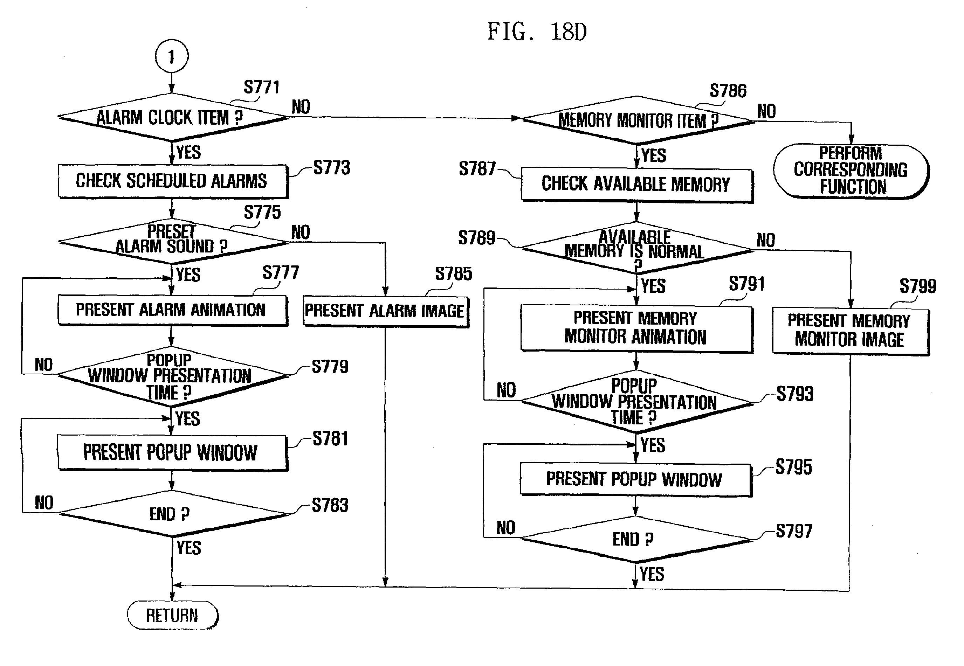

FIGs. 18c and 18d are flowcharts illustrating a procedure for presenting function items in the screen image presentation technique according to another exemplary embodiment of the present invention.

Referring to FIGs. 18c and 18d, the controller 110 checks a kind of the function item (S751). In this exemplary embodiment, it is assumed that there are three function items: mailbox item, alarm clock item, and memory monitor item. Of course, the number and kinds of the function items can be changed. If function information associated with a function item, the controller presents the function item in the form of an animated function item for attracting the user's interest and presents the function information in a popup window during a popup display time. In this embodiment, the function items are presented in an order of the mailbox item, alarm clock item, and memory item.

After the function item is checked, the controller 110 determines whether the function item is the mailbox item (S753). If the function item is the mailbox item, the controller 110 checks a number of the unread mails (S755) and then determines whether the number of the unread mails is greater than 0 (S757). If the number of the unread mails is 0, the controller 110 presents an empty mailbox image on the screen of the display unit 143 as shown in FIG. 9j (S767) for notifying no unread message.

If the number of the unread mails is greater than 0, the controller 110 presents an animated mailbox image as shown in FIG. 9k. After presenting the animated mailbox image, the controller determines whether a popup time is arrived (S761). If the popup time has arrived, the controller 110 presents a popup window as shown in FIG. 91 (S763) . The popup window is displayed during a predetermined popup time and then disappears. At the same time of the presentation of the popup window, the controller 110 starts a popup counter. After the popup window is presented, the controller determines whether the popup counter is expired (S765). If the popup counter is expired, the popup window disappears.

If the function item is not the mailbox item as step S753, the controller 110 determines whether the function item is an alarm clock item (S771). If the function item is the alarm clock item, the controller 110 checks scheduled alarms (S773) and determines whether there is scheduled alarms (S775) . If there is no scheduled alarm, the controller 110 presents an empty alarm image on the screen of the display unit 143 for notifying no scheduled alarm as shown in FIG. 9g (S785). If there is at least one scheduled alarm, the controller 110 presents an animated alarm clock image as shown in FIG. 9h (S777) and determines a popup time has arrived (S779). If the popup time is arrived, the controller 110 presents a popup window as shown in FIG. 9i (S781) . The popup window is displayed during a predetermined popup time and then disappears. At the same time of the presentation of the popup window, the controller 110 starts a popup counter. After the popup window is presented, the controller 110 determines whether the popup counter is expired (S783). If the popup counter is expired, the popup window disappears. The popup window presentation time may be configured in consideration of the alarm time. In this embodiment, it is assumed that the scheduled alarm is an alarm set with a specific date and time for "meeting" and "to do" rather than everyday occurrence alarm (for example, morning call), and displays alarms before 6 hours.

If the function item is not the alarm clock item, the controller 110 determines whether the function item is a memorymonitor item (S786) . If the function item is the memory monitor item, the controller 110 checks memory utilization (S787) and determines whether the memory utilization is in a predetermined normal range (S789). If the memory utilization is in the normal range, the controller 110 presents only the memory monitor item image on the screen of the display unit 143 for notifying that the memory utilization is normal, as shown in FIG. 9d (S799). If the memory utilization exceeds the normal range, the controller 110 presents an animated memory monitor as shown in FIG. 9e (S791) and determines a popup time has arrived (S793). If the popup time is arrived, the controller 110 presents a popup window as shown in FIG. 9f (S795). The popup window is displayed during a predetermined popup time and then disappears. At the same time of the presentation of the popup window, the controller 110 starts a popup counter. After the popup window is presented, the controller 110 determines whether the popup counter is expired (S797). If the popup counter is expired, the popup window disappears. The memory monitor item can be displayed regardless of the memory utilization. In this case, the controller 110 checks the memory utilization and then presents the memory utilization in the form of a popup window.

As described above, the function items can be presented together with the character house. In this case, the function items are displayed in a preset order. While presenting the function items in the preset order, the controller checks whether to present the function item in an active state. If it is required to present the function item in the activate state, the controller 110 presents the function item as an activated function item image and then provides the information related to the function in the form of a popup window after a while. The popup window is presented during a predetermined popup time. For example, when all the function items are presented in the activate state, the controller 110 presents in the order of the mailbox item as an animated mailbox image followed by the mailbox popup window, the alarm clock item as an animated alarm clock image followed by the alarm popup window, and the memory monitor item as an animated memory monitor image followed by the memory utilization popup window. The function items are presents in the character house as shown in FIGs. 9j, 9g, and 9d after the popup windows disappear.

The decoration items are presented on the basis of the decoration item information contained in the character house information. The item information includes an item ID informing a kind of the decoration item and a presentation position on the screen. The controller 110 retrieves a decoration item image corresponding to the item ID and presents the retrieved decoration item image at the presentation position on the screen as shown in FIG 11a. The decoration item is used for improving aesthetic factor of the character house, regardless of any function. The decoration item can be added or removed according to the user's configuration.

Now a procedure for presenting the character of the character house is described hereinafter.

In the character house, the character is implemented with three behavior properties.

First, the character greets to the user of the mobile phone at preset times. Second, the character irregularly gives the user a gift while greeting to the user. Third, the character expresses a state of the mobile phone or an emotion reflecting the state of the mobile phone in an animation or a motion. In this embodiment, it is assumed that the mobile phone has various emotions that represent a user's contribution to the mobile phone. The character house can be presented only with the third behavior property. That is, the greeting and gift-giving behavior properties can be disabled when the character house is presented. In this embodiment, it is assumedthat the greeting, gift-giving, and animation behavior properties are enabled.

The character house can consist of the items and background as well as the character, and the character house is presented in a specific operation mode (in the embodiment, idle mode) of the mobile phone. In the case that the character house is presented in the idle mode, the character house can be shown as an idle mode screen (for example, when a clam shell of the mobile terminal is unfolded or a slide mobile phone is slid open). If an event occurs while the character house is presented, the character house disappears, i . e. , the idle screen is replaced by other function screen. Also, the character house can be maintained when a specific event occurs (for example, a message processing event).

FIG. 19 is a flowchart illustrating a character presentation procedure of the screen image presentation method according to an exemplary embodiment of the present invention.

Referring to FIG. 19, the controller 110 checks a current time (S501) and then determines whether the current time is in any of preset greeting behavior time zones (S503, S513, S517, and S521). In this embodiment, the greeting behavior time zones are set to four times as in the table 2. The greeting behavior is shown once in a greeting behavior time zone.

Accordingly, the controller 110 determines whether the current time is in the greeting behavior time zones (S503, S513, S517, and S521). If the current time is in the greeting behavior time zones, the controller 110 determines the greeting behavior is shown (S505, S515, S519, and S523).

If it is determined that the current time is not in the greeting behavior time zones at the steps of S503, S513, S517, and S521 or greeting behavior is performed already in the greeting behavior time zone at the steps S505, S515, S519, and S523, the controller 110 skips the greeting behavior and controls the character to be in a normal behavior (S511).

If it is determined that the current time is in the greeting behavior time zones at the steps of S503, S513, S517, and S521 and the greeting behavior is not performed yet in the greeting behavior time zones at the steps S505, S515, S519, and S523, the controller 110 records the current time (S507) and controls the character to show the greeting behavior (S509). Recording the current time is to avoid that the greeting behavior is not performed in the same greeting behavior time zone again. After the greeting behavior is performed, the controller 110 controls the character to be in the normal behavior (S511).

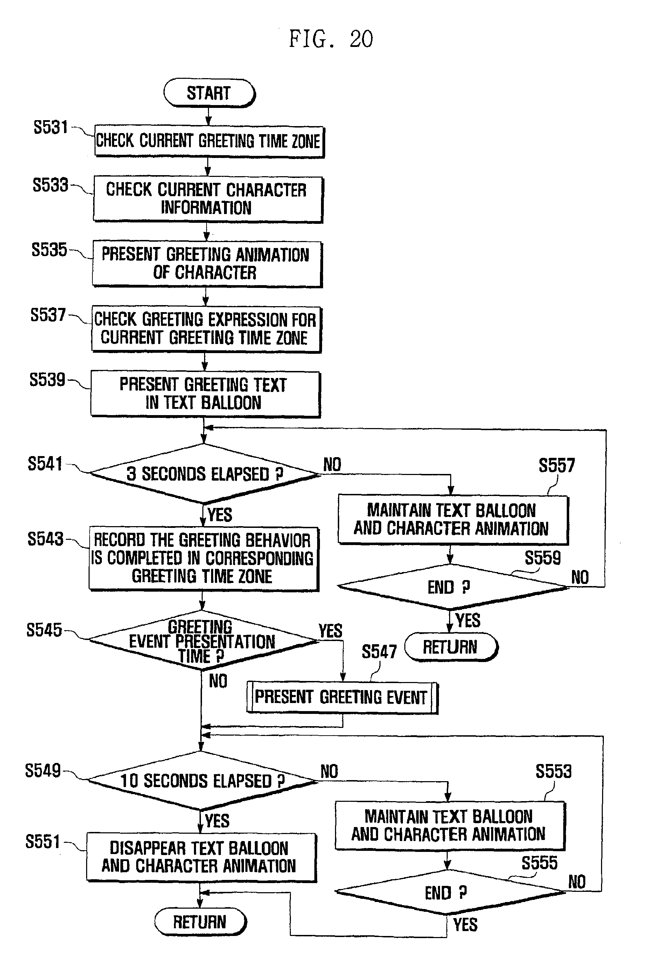

The greeting behavior presentation procedure is performed as shown in FIG. 20. The greeting behavior is presented as the character greets to the user and can be performed with a salutation and an addition event for giving an item or character money in a probability.

FIG. 20 is a flowchart illustrating a greeting behavior presentation procedure of FIG. 19.

Referring to FIG. 20, the controller 110 checks a current greeting time zone (S531) and checks current character information (S533). Next, the controller 110 controls the character to show the greeting behavior in the form of an animation (S535) and retrieves a greeting text corresponding to the current greeting time zone (S537) . After retrieving the greeting text, the controller 110 presents the retrieved greeting text in the form of a text balloon (S539). The greeting behavior can be presented as shown in FIG. 12. The greeting text can be presented in the form of the text balloon of FIG. 12. The greeting text can be changed, depending on the greeting time zones.

In the case that the character house presentation is terminated due to an event occurrence during the character' s greeting behavior, if the greeting behavior is performed for a tolerable time, the controller 110 determines the greeting behavior has been performed. It is assumed that the tolerable time is 3 seconds in this embodiment.

Accordingly, the controller 110 determines whether the greeting behavior is continued over the tolerable time (in this embodiment, 3 seconds) (S541). If the greeting behavior is not continued over the tolerable time, the controller 110 maintains the greeting behavior and text balloon presentation (S557). While maintaining the greeting behavior and the text balloon presentation, the controller determines an event occurs such that the character house presentation is terminated in 3 second-tolerable time (S559) If an event occurs in tolerable time, the controller 110 stops the greeting behavior and then returns. In this case, the greeting behavior is performed again, if the character house is activate in the same greeting behavior time zone.

If the greeting behavior is performed over the tolerable time (3 seconds), the controller determines that the greeting behavior is completely performed and records the completion of the greeting behavior in the greeting behavior time zone (S543). Next, the controller 110 determines whether the event presentation time has arrived (S545). The event may occur in a random probability set according to the times of the greeting behaviors.

If the event presentation time has arrived, the controller 110 presents the greeting event (S547).

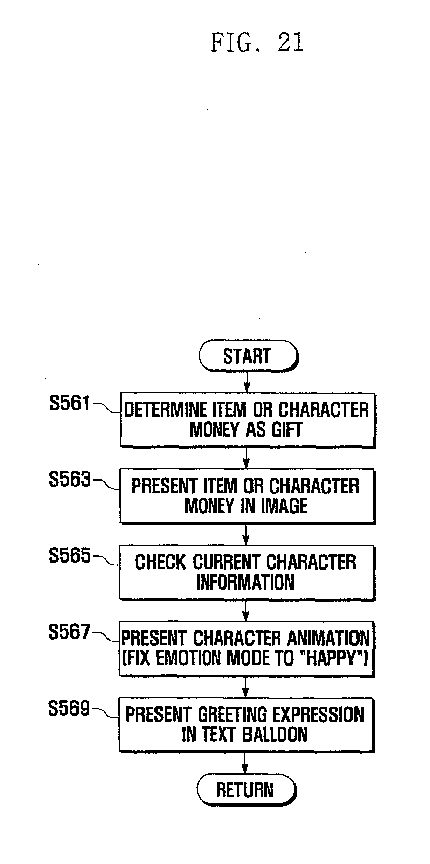

FIG. 21 is a flowchart illustrating a greeting event presentation procedure occurred during a greeting behavior of the character of the screen image presentation technique according to an exemplary embodiment of the present invention.

The greeting event can randomly occur while the character performs the greeting behavior and the greeting event may be presented in the same manner with the character' s greeting behavior except for the screen layout and the text.

Referring to FIG. 21, the controller 110 selects an item or character money as a gift at the greeting event presentation time (S561) and presents an image corresponding to the item or the character money to give as the gift (S563) . Next, the controller 110 checks the information of the character (S565) and animates the character (S567). Subsequently, the controller 110 presents the greeting text in the form of the text balloon (S569).

When presenting the character according to the greeting event, the controller 110 animates the character with the text and/or sound as shown in FIG. 13. At this time, the emotion mode of the character is fixed to "happy" and the character is presented with the item image and/or the character money image as the gift. The item image and the character money image provided in the greeting event presentation procedure can be displayed at the bottom left or bottom right portion of the character house as shown in FIG. 13, and the text expression related to the gift is presented in the form of a text balloon having a 30% transparency.

After performing the greeting event presentation procedure as in FIG. 21 at step S547 of FIG. 20, the controller 110 determines whether 10 seconds are elapsed after the presentation of the greeting expression text balloon (S549) . If 10 seconds have elapsed, the controller 110 makes the text balloon and the character animation image disappear (S551).

If 10 seconds have not elapsed, the controller maintains the presentation of the current character animation and the greeting expression text balloon (S553) . The greeting behavior of the character is assumed to be maintained for 10 seconds. Accordingly, before the time presenting the greeting behavior of the character is over 10 seconds, the controller 110 maintains the greeting behavior of the character (S549, S553, and S555). If 10 seconds have elapsed for the start of the greeting behavior of the character, the controller 10 makes the greeting expression text balloon and the character animation image disappear (S551).

As described above, if the current time is in a predetermined greeting time zone, the controller 110 controls the character of the character house to show the greeting behavior corresponding to the greeting time zone. The greeting behavior is for greeting to the user of the mobile phone and is performed on in every greeting time zone. If the mobile phone is turned off or the character house is not activated, the greeting behavior of the character is skipped. In this embodiment, the greeting behavior of the character is performed in a random probability so as to give the user an unexpected gift. In this embodiment, the gift-giving behavior is performed during the greeting behavior time, however, it can be performed at any time when the character house is presented. In the case that the gift-giving behavior is performed at any time when the character house is presented, the controller 110 can control the gift-giving behavior is performed at the time when the character is presented.

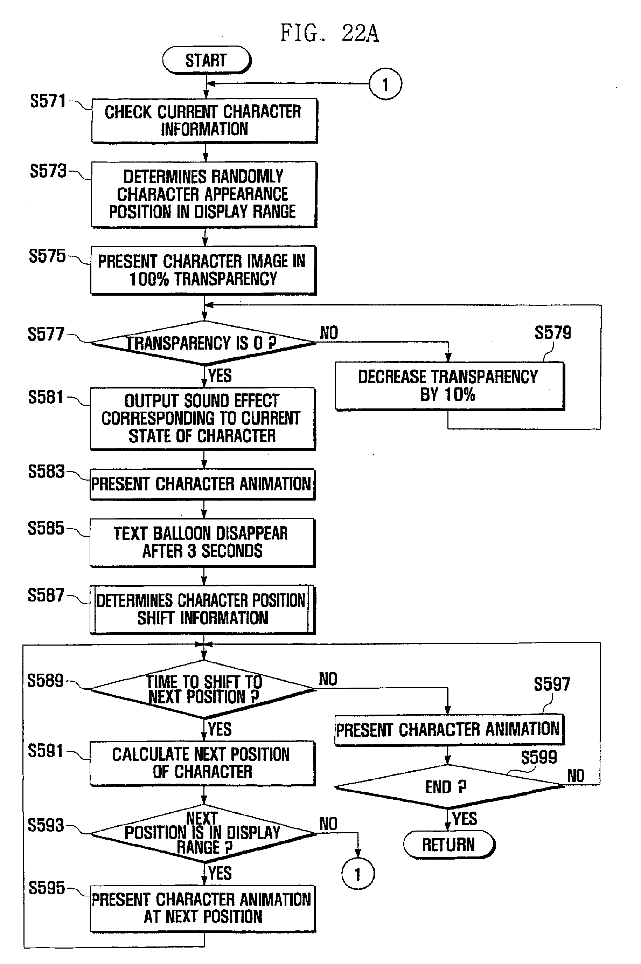

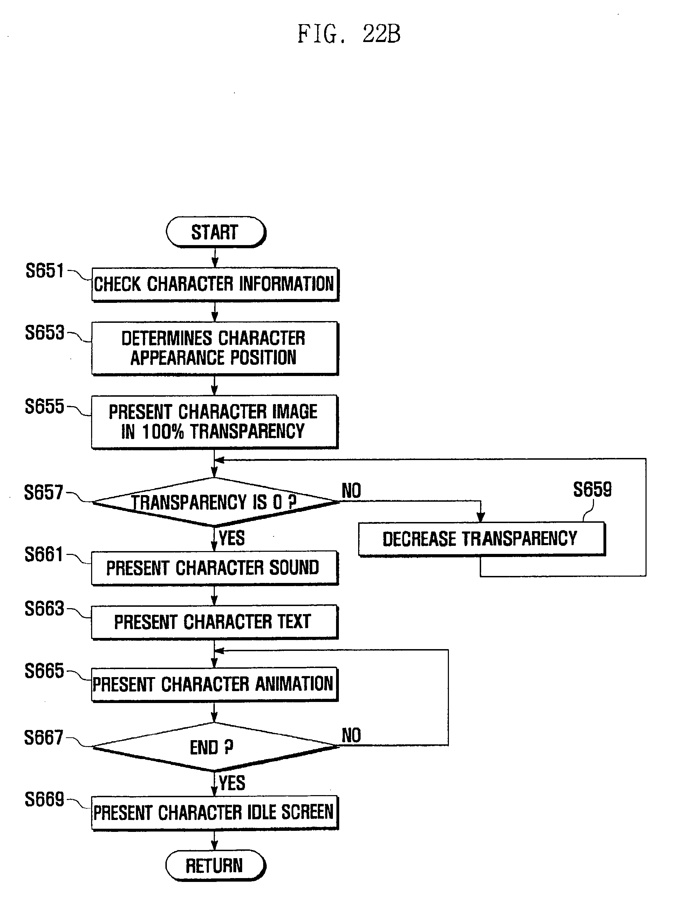

In FIG. 19, the controller 110 controls the character to be in a normal behavior (S511) after performing the greeting behavior of the character out of the greeting time zones or after performing the greeting behavior. The character behaviors are presented in the procedure of FIG. 22a or FIG. 22b.

FIGs. 22a and 22b are flowchart illustrating an animation behavior presentation procedure of the screen image presentation technique according to an exemplary embodiment of the present invention.

In FIG. 22a, the character is moving and animated together with a text and sound for expressing the state and emotion of the character while the character house is presented. In FIG. 22b, the character is animated after the text and sound expression are presented in the character house.

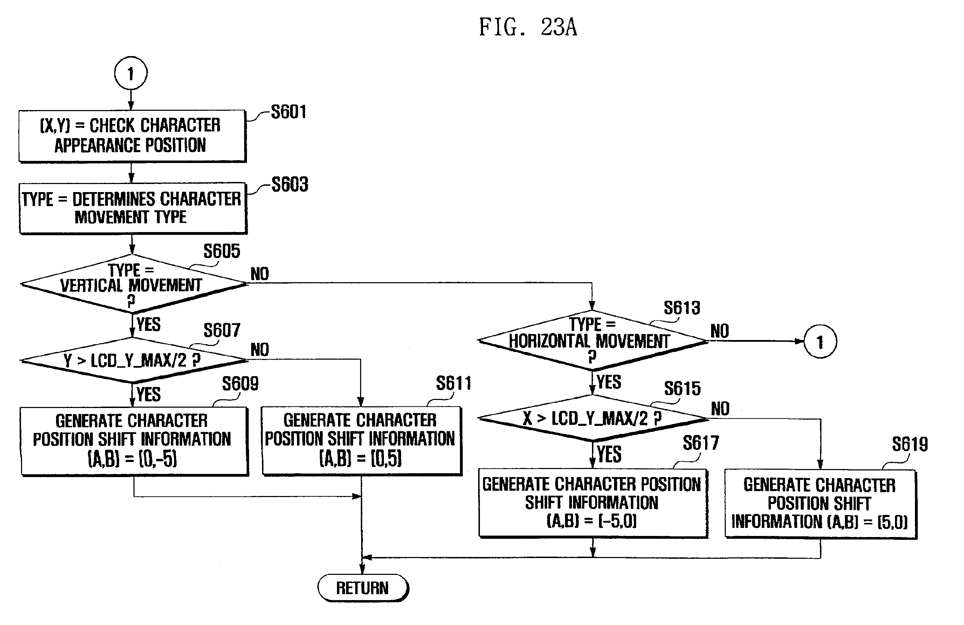

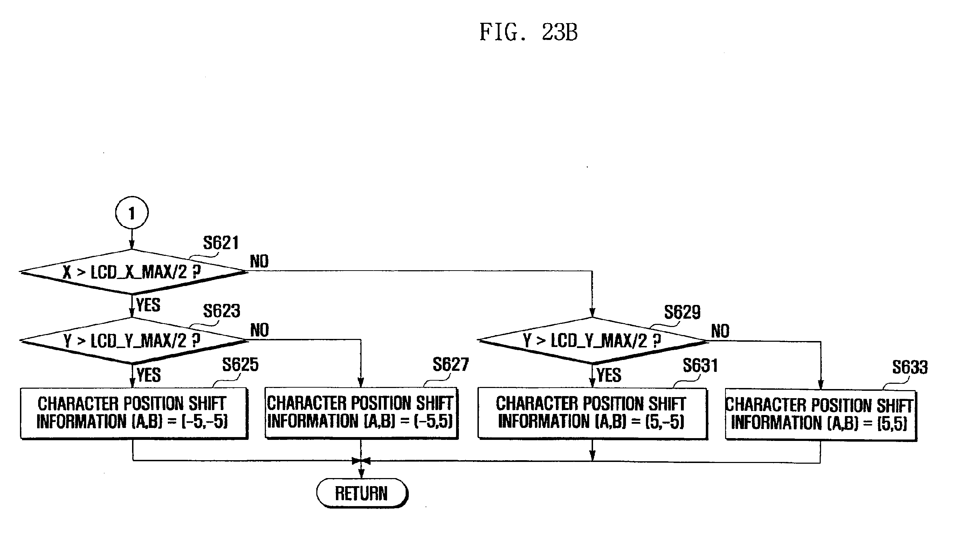

The character behavior can be vividly expressed in the character house in various manners. For example, the character can be represented by a plurality of animation images such that the animation images are continuously displayed to form an animation of the character. Also, the character can be presented to move along a preset movement line. The character animation is implemented by presenting the animation images in series at regular interval, similar to presenting the function items as shown in FIG. 9e, 9h, and 9k. The character movement is implemented by moving the character on the basis of a preset movement direction, movement distance, and movement time. In order for the character to seamlesslymove, the movement can be implemented with a plurality of images. FIG. 23 shows a procedure for presenting a character movement.

FIG. 22a shows a character movement behavior presentation procedure, and FIG. 22b shows a character gesture behavior presentation procedure.

Referring to FIG. 22a, the controller 110 checks information on the current character (S571) and determines an initial appearance position of the character (an X, Y coordinate in the screen of the display unit 143) . The initial appearance position of the character can be randomly determined in a display range of the screen of the display unit 143. After the initial appearance position is determined, the controller 110 presents the character with 100% transparency (S575). With the 100% transparency, the character is invisible so that the background and items images are displayed on the screen of the display unit 143 as shown in FIG. 4a.

Next, the controller 110 decreases the transparency of the character image at a predetermined rate such that the character gradually appears in the character house. That is, the controller 110 controls such that the character appears gradually by repeating the steps S577 and S579. If it is assumed that the transparency of the character image decreases by 10%, the controller 110 controls to gradually reduce the transparency of the character image to be opaque (alpha blending effect). Accordingly, the transparency of the character image decreases from 100% to 0% by 10% such that the character appears in the character as shown in FIG. 4b.

Next, the controller 110 outputs a sound effect representing the state of the character as shown in FIG. 4c (S581), animates the character as shown in FIG. 4d (S583), presents a text expressing the state and emotion of the character in the text balloon during a predetermined presentation time as shown if FIG. 4e, and then terminates the animation of the character. Here, the presentation time is set to 3 seconds. When presenting the character house in the above manner, the text balloon is presented after appearance of the character in the order of FIGs. 4a to 4e and presentation of the sound effect and the character animation.

The controller 110 determines a next position of the character and then performs movement of the character (S589, S597, and S559). In order to present the character movement, the controller determines position shift information (S587). The position shift information is determined according to a procedure as shown if FIGs. 23a and 23b.

FIGs. 23a and 23b show the character shift information determination procedure in detail.

Referring to FIGs. 23a and 23b, the controller 110 checks an initial appearance position of the character (S601) and determines a movement type of the character (S603) . The movement type includes a vertical movement, a horizontal movement, and a diagonal movement. The movement type is randomly selected among the three movement types at step S603. It is assumed that the character moves by 5 pixels.

If the movement type is selected, the controller determines whether the movement type is the vertical movement (S605). If the movement type is the vertical movement, the controller 110 determines whether the character's appearance position locates at an upper half part of the screen of the display unit 143 (S607). If the character's appearance position locates at an upper half part of the screen of the display unit 143, the controller 110 generates a character position down shift information ((A, B) = (0, -5)) (S609). If the character's appearance position locates at a lower half part of the screen of the display unit 143, the controller 110 generates a character position up shift information ((A, B)=(0, 5)) (S611).

If it is determined, at step S605, that the movement type is not the vertical movement, the controller 110 determines whether the movement type is the horizontal movement (S613). If the movement type is the horizontal movement, the controller determines whether the character' s appearance position locates at a right half part of the screen of the display unit 143 (S615). If the character' s appearance position locates the right half part of the screen of the display unit 143, the controller generates a character position left shift information ((A, B)=(-5, 0)) (S617). If the character's appearance position locates at a left half part of the screen of the display unit 143, the controller 110 generates character position right shift information ((A, B)=(5, 0)).

If it is determined, at step S615, that the movement type is not the horizontal movement, the controller 110 regards the movement type as the diagonal movement.

The diagonal movement includes a top-right to bottom-left movement, a top-left to bottom-right movement, a bottom-right to top-left movement, and a bottom-left to top-right movement.

If the movement type is the diagonal movement, the controller determines whether the character's appearance position is located at the right half part (X>LCD_X_MAX/2) of the screen (S621). If the character's appearance position is located at the right half part of the screen, the controller determines whether the character's appearance position is located at the upper half part (Y>LCD_Y_MAX/2) ) of the screen (S623). If the character's appearance position is located at the upper half part, the controller 110 generates character position left-down shift information ((A,B)=(-5,-5)). If the character's appearance position is not located at the upper half part, the controller 110 generates character position left-up shift information ((A,B)=(-5,5)).

If it is determined, at step S621, that the character's appearance position is not located at the right half part of the screen, the controller determines whether the character's appearance position is located at the upper half part (Y>LCD_Y_MAX/2) ) of the screen (S629). If the character' s appearance position is located at the upper half part, the controller 110 generates character position right-down shift information ((A,B)=(5,-5)) (S631). If the character's appearance position is not located at the upper half part, the controller 110 generates character position right-up shift information ((A,B)=(5,5)) (S633).

At step S587 of FIG. 22a, the controller 110 checks the appearance position and movement type of the character and calculates the position shift information on the basis of the appearance position and the movement type of the character. The movement direction of the character is changed according to the character's initial appearance position and the movement type of the character is randomly selected among the three movement types (the vertical, horizontal, and diagonal movement). The movement direction is determined such that the character secures the longest length to move at an axis of the center of the screen.

If the position shift information is obtained, the controller 10 controls such that the character moves in the movement direction and according to movement type (S589 to S599). The appearance position shift is performed in a predetermined interval. It is assumed that the character moves 20 pixels per second. And the character's appearance position shift is performed by 5 pixels every 0.25 seconds. The character is moving and animated at the same time. That is, the character moves in a direction determined at every predetermined times by a unit of predetermined number of pixels. The character can be animated while moving or not moving. The controller 110 determines whether the position shift time arrived (S589). If the position shift time is not arrived, the controller 110 animates the character (S597).

If the position shift time has arrived, the controller 110 calculates a next position of the character (S591). The next position is obtained according to the procedure shown in FIGs. 23a and 23b. After obtaining the next position, the controller 110 determines whether the next position of the character is in a display range of the screen of the display unit 143 (S593). If the next position of the character is in the display range of the screen, the controller 110 controls to move the character to the next position and animate the character. The controller 110 moves the character on the screen of the display unit 143 in the predetermined movement direction at the predetermined movement times by unit of predetermined number of pixels as shown in FIG. 4f and 4g.

If the character deviates from the display range of the screen of the display unit 143 while repeating the above operation, the controller 110 recognizes the deviation of the character and returns to the step S571 to show the idle mode screen as shown in FIG. 4h. Consequently, the presentations of FIGs. 4b to 4g are repeated.

The above operation is repeatedly performed while presenting the character house. If the presentation of the character ends (S599), the controller 110 terminates the behavior of the character.

The movement of the character is performed after the text expression of the character disappears as shown in FIG. 4f and 4g. The movement direction of the character is randomly selected among the vertical, horizontal, and diagonal direction. That is the movement direction is determined such that the character secures the longest length to move at an axis of the center of the screen and the movement speed is determined at 20 pixels per second. If the character moves across the border of the screen of the display unit 143 to disappear, the character house is presented with the character. After a while (about 2 seconds), the operation depicted in FIG. 4b is performed.

As described above, the presentation of the character behavior in FIGs. 22a and 22b is performed by repeating the operations of FIGs. 4a to 4g. The character can be presented in 6 steps. The first is an invisible character step as shown in FIGs. 4a and 4h, in which the character is not presented yet such that the character house is displayed with the items and background. The second is a character presentation step, in which the character appears at a random position in the character house. When the initial appearance position of the character is close to the border of the screen of the display unit 143 such that the whole image of the character cannot be shown, the character is not presented. The character can appear in a fade-in effect by decreasing the transparency of the character image. The transparency decreased from 100% to 0% (alpha blending image). The third is a sound effect output step as shown in FIG. 4c, in which a unique sound effect is output according to the state of the character after the character is completely presented. The sound effect is output once. The fourth is an animation step as shown in FIG. 4d, in which the character is animated after the sound effect is output. The character animation is repeated until the character moves to disappear out of the screen of the display unit 143. The fifth is a text presentation step as shown in FIG. 4e, in which the state and emotion of the character are presented in text. The text can be presented in the form of a text balloon as shown in FIG. 4e. The text balloon is presented with a semitransparent balloon having a 30% transparency in consideration of the time taken for reading the text. The text balloon disappears after about 3 seconds. The sixth step is a character movement step as shown in FIGs. 4f to 4g, in which a movement direction of the character is randomly determined. After the movement direction and distance is determined, the character moves according to the movement direction and distance. The character moves to disappear out of the screen of the display unit 143.

Since the character appears at a random position, the character may appear at different position at every appearance time. The movement direction is randomly determined, the character may move in different directions at every movement time. The sound effects and the texts can be differently prepared for expressing various states and emotions of the character. Since the appearance position, movement direction, sound effect, and text are presented differently at every presentation timings, various character behaviors can be provided to the user.

At the initial character presentation time, the operations illustrated in FIGs. 4a to 4g are performed and then the operations of FIGs. 4c and 4e can be skipped after the character moves to disappear out of the screen of the display unit 143. In this case, the sound effect and the text balloon appear once and the character appears at a random position and moves in a random direction.

Referring to FIG. 22b, the controller 110 checks information of the current character (S651) and determines a character appearance position (S653). The character appearance position can be a preset position on the screen of the display unit 143. In this embodiment, the character appearance position is preset at a bottom right portion of the screen relative to the center of the screen of the display unit 143. After determining the character appearance position, the controller 110 presents the character with a 100% transparency (S655). Since the transparency is 100%, the character is invisible. Accordingly, the character house is displayed only with the background image and item images as shown in FIG. 4i.

Next, the controller 110 decreases the transparency of the character at a predetermined rate such that the character appears gradually. That is, the controller 110 repeats the steps S657 and S659 for gradually presenting the character. If it is assumed that the transparency of the character image decreases 25% every 0.5 seconds, the character is completely presented in 2 seconds (alpha blending effect). The transparency of the character image decreases in an order of 100%, 75%, 50%, 25%, and 0% such that the character house is displayed as shown in FIG. 4j. After the character has completely appeared, the controller 110 outputs a sound effect corresponding to the state of the character as shown in FIG. 4c (S661) and then presents a text associated with the state and emotion of the character in the form of a text balloon during a predetermined text presentation time as shown in FIG. 41. The text presentation time can be set to about 1.5 seconds in consideration of the time taken for reading the text.

After outputting the sound effect and presenting the text, the controller 110 presents a character animation at steps S665 to S669. The character animation is repeated until the character disappears from the character house. As described above, the character presentation is performed in the order of the character appearance, output of sound effects, presenting text balloon, and character animation.

As described above, the screen image presentation method of the present invention presents the character house (screen) in a specific operation (idle mode) of the mobile phone. In the idle mode, the controller of the mobile phone presents a character house by arranging a background and items in the character house and presents a character. The character expresses a state and emotion in the forms of a sound effect and text. The character moves in random direction and shows an animation on the screen of the display unit 143. The background image is used as a background of the house and can be replaced with another image so as to graphically show the progress of the time using character house. The items presented with the character house includes movement items, decoration items, and function items. The function items are used for improving user convenience by showing system information of the mobile phone. The decoration items are used for improving the aesthetic effect of the screen of the mobile phone. The motion items are used to make dynamic the screen by moving around the screen house. Also, the character house can be implemented with a special expression function such that the character gives special information at predetermined time zones or greets to the user. Also, the character house can be implemented such that the character gives an item or character money as a gift at unexpected timing while the character greets, resulting in user's enjoyment.

In this embodiment, the character house is structured by presenting the elements in an order of the background, items, and character. However, the presentation order can be changed. In this embodiment, the character house is configured such that the greeting and event presentation are performed when the item is presented, however, the greeting and event presentation can be performed when the background or character is presented.

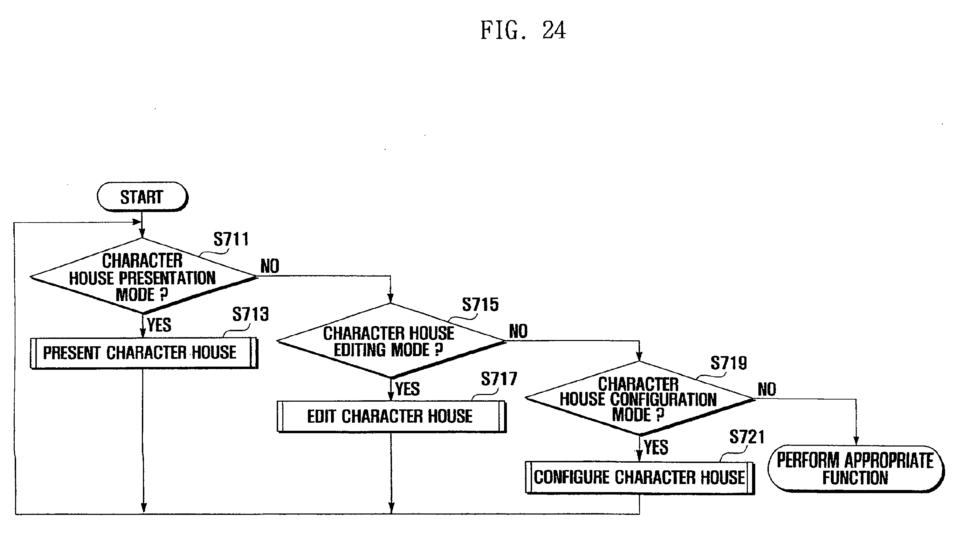

FIG. 24 is a flowchart illustrating a screen house presentation procedure of a screen image presentation method for a mobile phone according to another exemplary embodiment of the present invention.

In association with the character house presentation, the mobile phone can be in one of a character house configuration mode, character house editing mode, and character house presentation mode.

The character house configuration mode and character house editing mode can be accessed by a corresponding menu selection or a specific key (including a soft key) manipulation, and the character house presentation mode activates for a specific operation mode of the mobile terminal when the character house presentation function is enabled.

Referring to FIG. 24, if a character house configuration mode is executed by a mode execution key or menu selection, the controller 110 detects the execution of the character house configuration mode (S719) and then displays a character house configuration menu screen for allowing a user to configure the character house presentation options (S721). The character options include a character house presentation on/off option and character quotients presentation on/off option. If the character house presentation on/off option is set to off, the controller 110 disables the character house presentation function. If the character quotients presentation on/off option is set to off, the controller 110 disables the presentation of the character quotients shown in FIG. 7b and 8. The character house option can include a greeting function on/off option. If the greeting function on/off option is set to off, the controller 110 disables the greeting behavior presentation shown in FIG. 12 and greeting event presentation shown in FIG. 13.

If the character house editing mode is executed by a mode executing key or menu selection, the controller 110 detects the executing of the character house editing mode (S715) and then displays a character house editing menu screen for allowing the user to edit the character house (S717). In the character house editing mode, it is possible to change, add, and delete the background, items, and character.

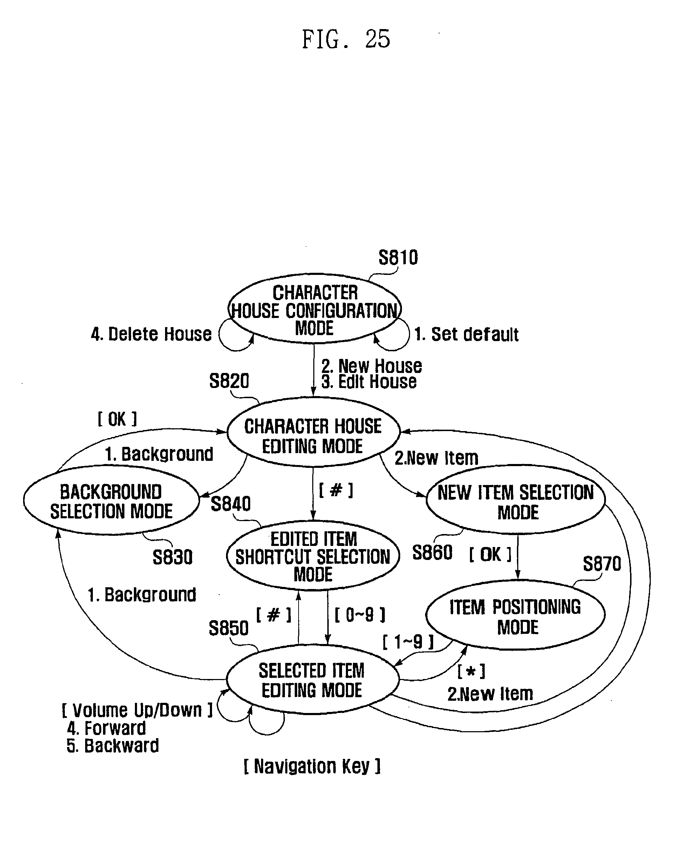

FIG. 25 is a state diagram illustrating a character house design procedure of a screen image presentation method according to an exemplary embodiment of the present invention.

Referring to FIG. 25, the controller 110 displays a character house configuration screen in the character house configuration mode 810, in which it is allowed deleting a character house or setting a default character house. If a "new character house" option is selected or a "character house editing" option is selected on the character house configuration screen, the controller 110 displays a character house editing screen in the character house editing mode 820. From the character house editing mode 820, it is possible to enter modes 830 to 870 for editing a background and items. How to add, delete, and modify the background and items in the character house is explained hereinafter.

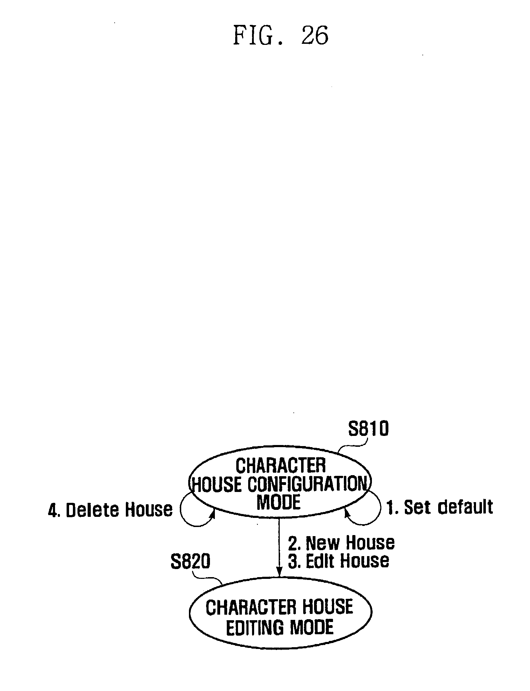

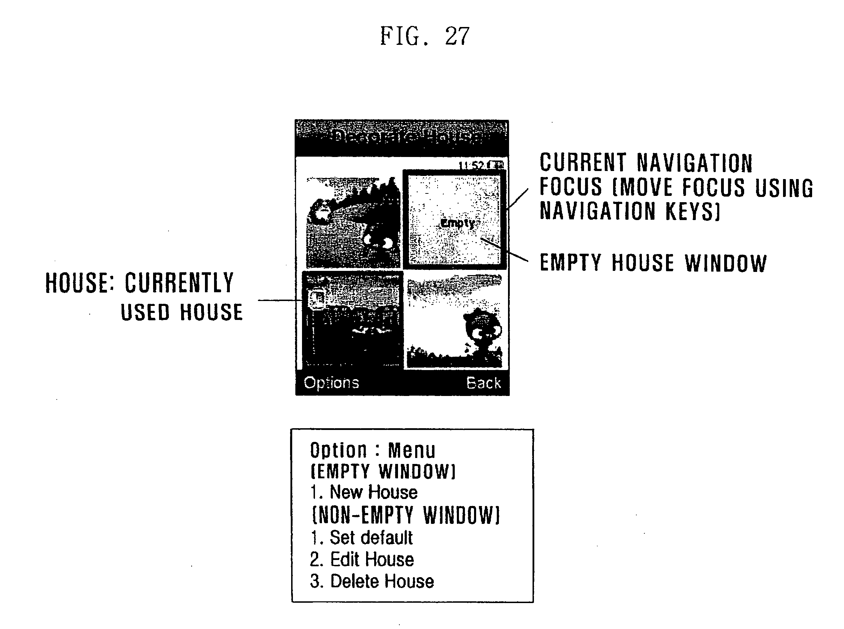

FIG. 26 is a state diagram illustrating transitions between the character house configuration mode and the character house editing mode of FIG. 25, and FIG. 27 is a screen image illustrating a character house configuration screen in the character house configuration mode of FIG. 25.

Referring to FIGs. 26 and 27, the character house configuration screen displays character houses that can be used for a specific mode screen image. The mobile phone includes a plurality of character houses. These character houses are displayed on the character house configuration screen in the form of tiled windows as shown in FIG. 27. In this embodiment, it is assumed that the character house configuration screen displays four character houses once. If there are three character houses stored in the mobile phone, one of the four tiledwindow is shown empty. In relation with the empty character house window, it is impossible to set a default character house, delete a character house, and edit a character house. Also, a new character house can be put into the empty window. If an OK key is input while the empty window is selected, a character creation function is enabled. If the OK key is input while one of the tiled windows having the character houses is selected, the character house is set for a screen image for a specific operation mode of the mobile phone.

In order to select one of the character houses on the character house configuration screen, the cursor navigates on the tiled windows in accordance with a direction key (navigation key) manipulation. When the cursor is positioned on one of the tiled windows, the controller 110 displays a menu having options shown in table 4.

**Table 4**

| | |
|---|---|
| Empty window | 2. new character house |
| Non-empty window | 1. set default |
| | 2. edit character house |
| | 3. delete character house |

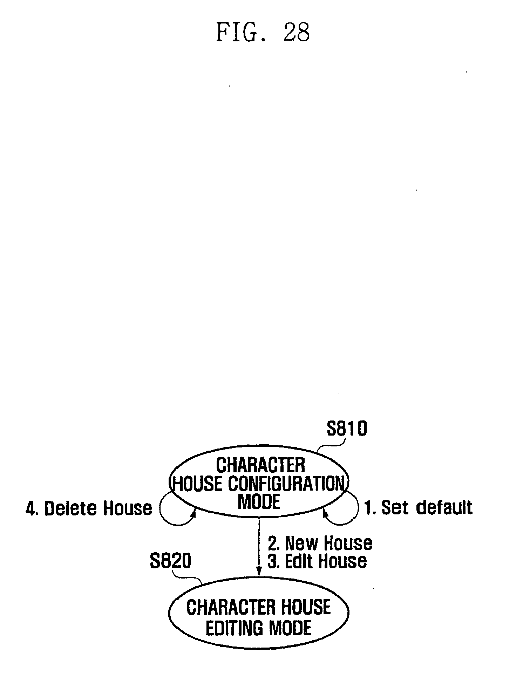

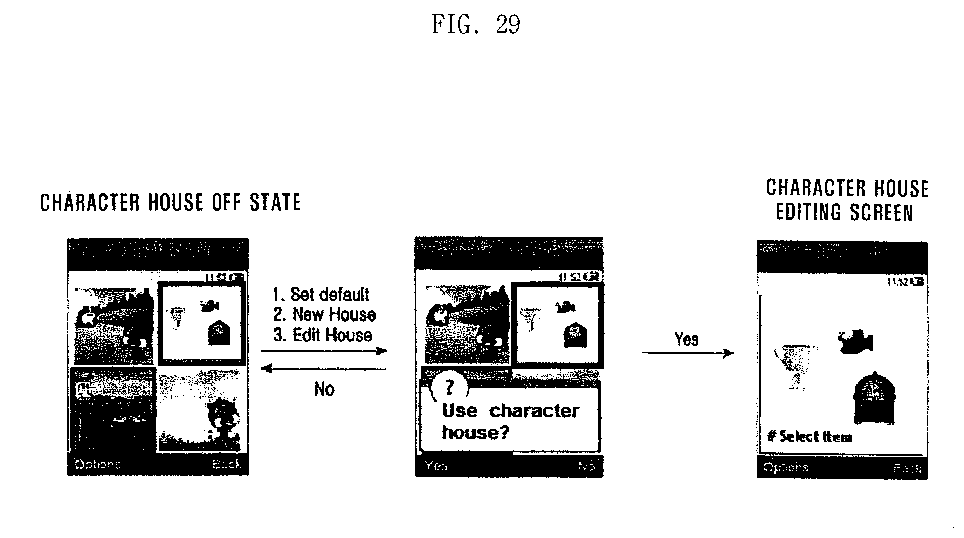

FIG. 28 is a state diagram illustrating transitions between the character house configuration mode and the character house editing mode of FIG. 25, and FIG. 29 shows screen images illustrating a procedure for setting a "character house presentation on/off" option on the character house configuration screen of FIG. 25.

Referring to FIGs. 28 and 29. the "character house presentation on/off" option can be set to "on" or "off." The controller 110 displays the character houses on the character house configuration screen in the form of tiled windows as shown in a first screen image of FIG. 29. If one of the windows is selected while the "character house presentation on/off" option is set to off, the controller 110 highlights the selected window and displays an announcement message asking whether to use the character house presentation function as shown in a second screen image of FIG. 29. If a user command is input for using the character house presentation function, the controller 110 enables the character house presentation function and displays the character house of the selected window as shown in a third screen image of FIG. 29.

As described above, if the character house configuration screen is loaded while the character house presentation function is disabled, the controller 110 displays an announcement message asking whether to user the character house presentation function and then enables the character house presentation function according to the user command for using the character house presentation function.

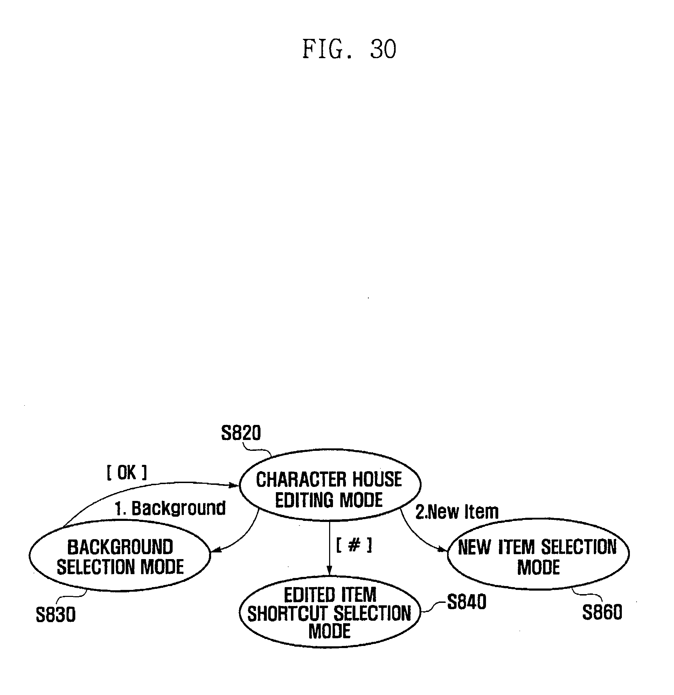

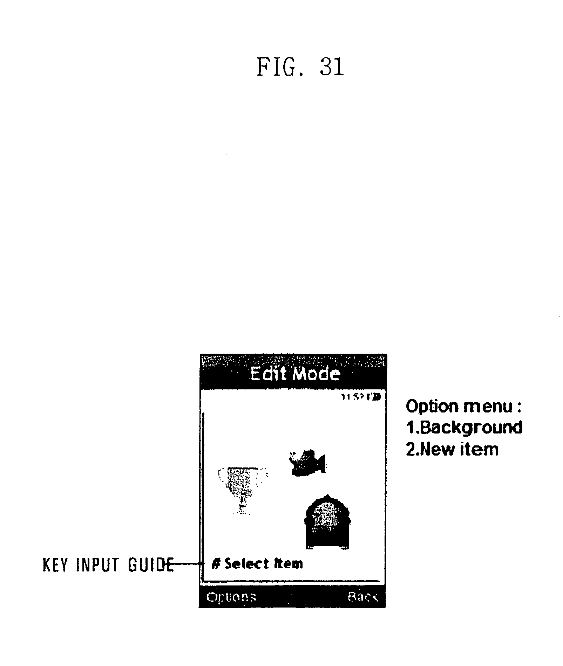

FIG. 30 is a state diagram illustrating transitions among the character house editing mode and specific item editing modes of FIG. 25, and FIG. 31 shows a screen image illustrating an example character house editing screen in the character house editing mode of FIG. 25.

Referring to FIGs. 30 and 31, the character house editing screen is displayed when a "new character house" option or "edit character house" option is selected on the character house configuration screen. The character house editing screen provides a menu having options for editing the background and item (1. Background, 2. New item). When the "new character house" option is selected, a selected background is basically presented without items. The character house editing screen displays a key input guide as shown in FIG. 31. If a menu option is selected, the menu having options for editing the background and items is displayed.

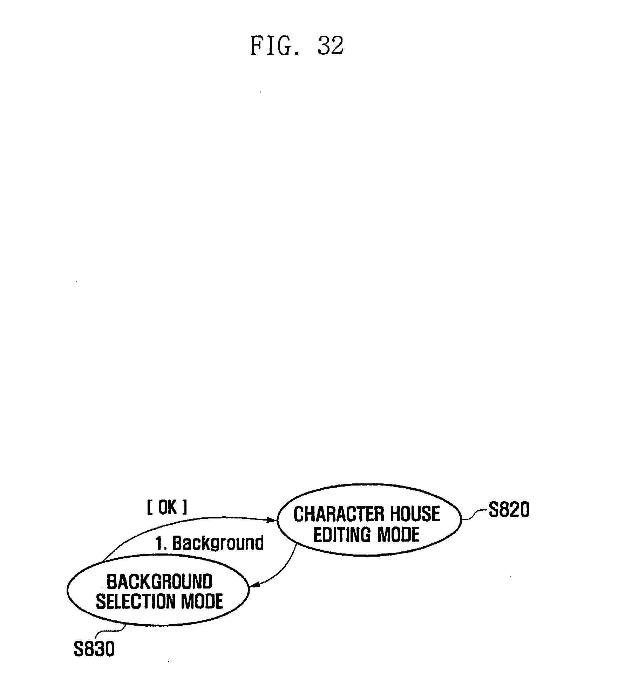

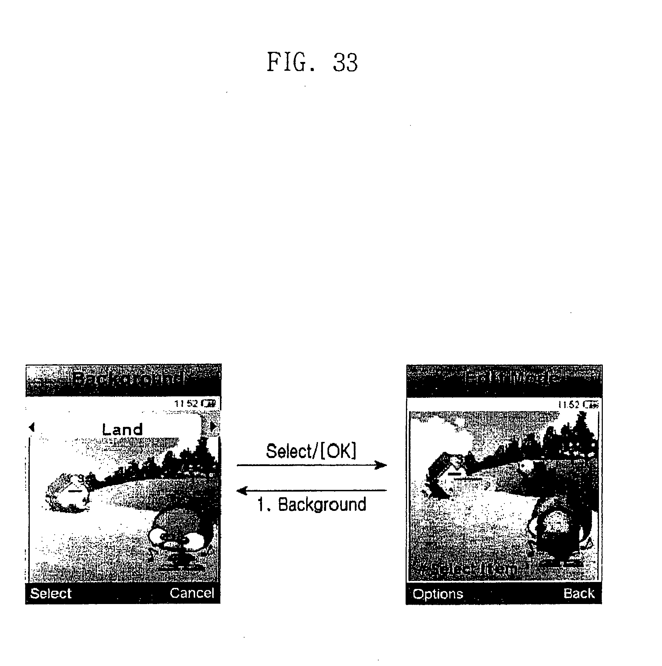

FIG. 32 is a state diagram illustrating transitions between the character house editing mode and the background selection mode of FIG. 25, and FIG. 33 shows screen images illustrating a procedure for selecting a background on the background selection mode of FIG. 32.

Referring to FIGs. 32 and 33, if a "background" option is selected on the character house editing screen, the controller 110 controls to present the background selection screen in a background selection mode 830 as shown in a first screen image of FIG. 33. The background selection screen enables navigating background images using direction keys (navigation keys) . If a selection key (OK key) is input while one of the background images is presented, the controller 110 returns to display the character house editing mode 820 and displays the selected background image as the background on the screen of the display unit 143 as shown in a second screen image of FIG. 33.

As described above, if the "background" option is selected on eh character house editing screen, the controller 110 presents available background images stored in the mobile phone with titles of the background images. The background images are shown one by one according to the navigation key manipulation. If a selection key is input while a background image is displayed, the background image is stored as the background and the character house editing screens is redisplayed.

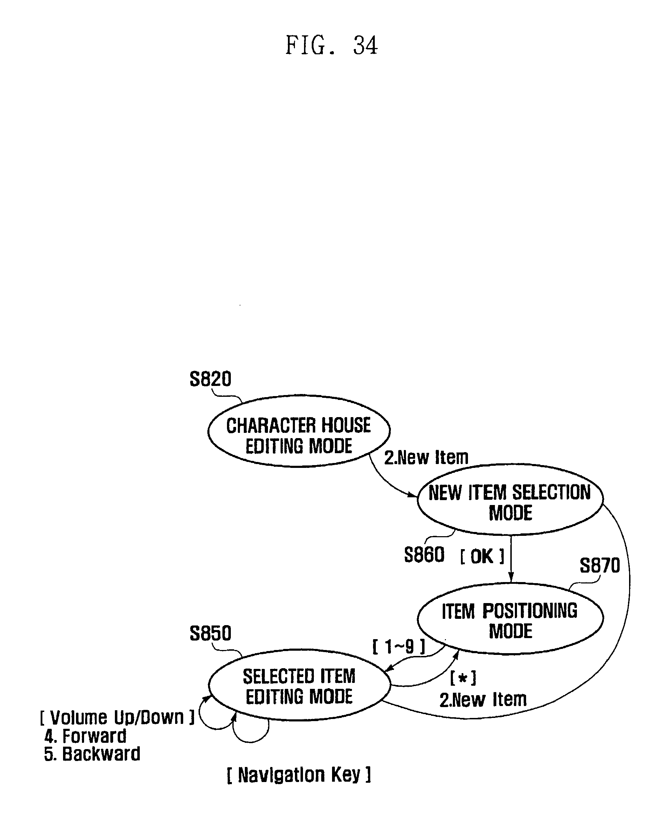

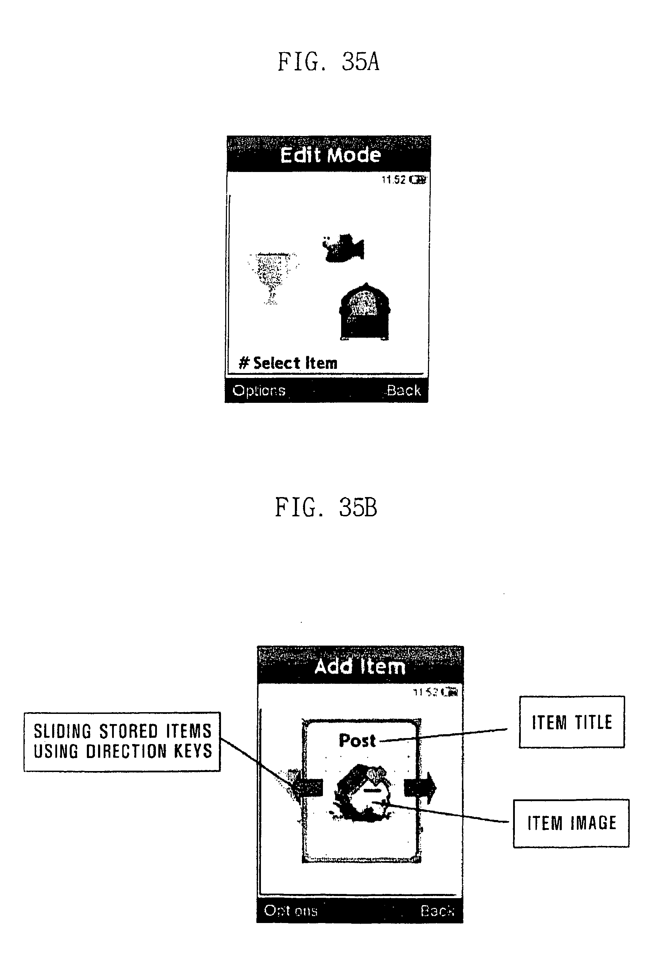

FIG. 34 is a state diagram illustrating transitions between the character house editing mode and item editing modes of FIG. 25, and FIGs. 35a to 35d show screen images illustrating a procedure for adding an item to the character house in the character house editing mode of FIG. 34.

Referring to FIGs. 34 and 35a to 35b, if a "new item" option is selected from option menu on the character house editing screen, as shown in FIG. 35a, in the character house editing mode 820, the controller 110 displays a new item selection screen in a new item selection mode 860 as shown in FIG. 35b. The new item selection screen enables navigating item images using direction keys (navigation keys). Each item image is presented with a title of the item image.

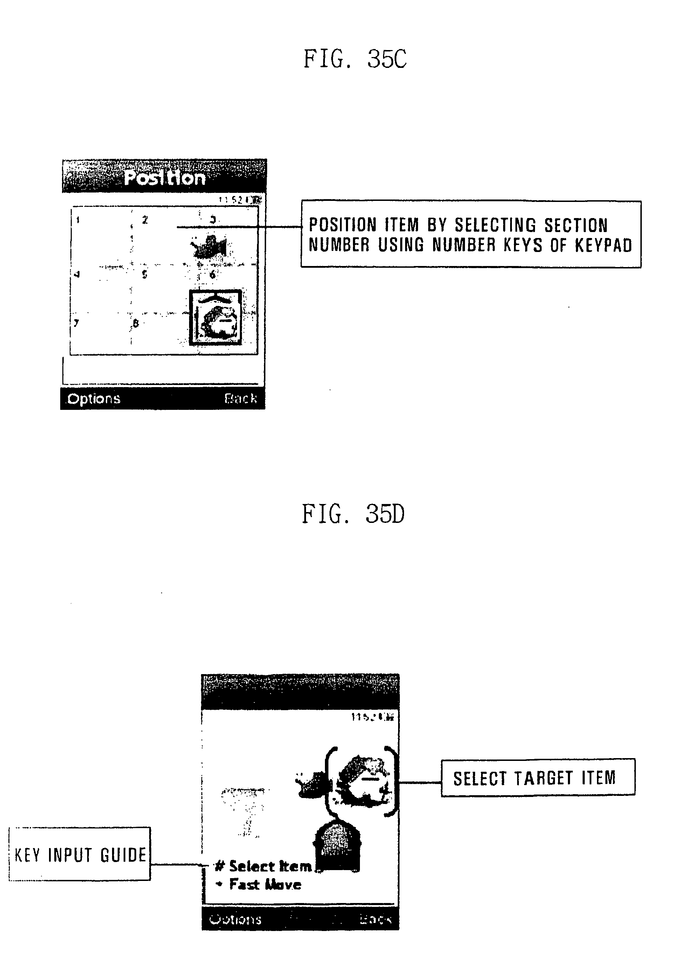

If a selection key (OK key) is input while one of the item images is presented, the controller 110 displays an item positioning screen, as shown in FIG. 35c, in an item positioning mode 870. The item positioning screen is partitioned to define a plurality of sections on the screen of the display unit 143 and each section is assigned a unique section number. The item positioning screen enables moving an item from a place to another with reference to the section number. If a section number is input while the item positioning screen is displayed, the controller 110 displays a selected item editing screen, in which the selected item is positioned at the section having the input section number as shown in FIG. 35d, in a selected item editing mode 850. He selected item editing screen enables fine adjustment of the selection item position by manipulating the navigation keys.

The selected item editing screen also provides an item-fixing key (for example, # key) for fixing the selected item at the adjusted position and a fast move key (for example * key) for quickly moving the item to another section in the item positioning mode 870. If an additional item is selected from the option menu of the selected item editing mode 850, the controller 110 displays the new item selection screen of the new item selection mode 860 so as to allow selecting another item. If the fast move key is input while the selected itemediting screen is presented, the controller 110 performs displays the item position screen of the item position mode 870 so as to move the item to another section.

As described above, the selected item editing mode 850 enables fine adjustment of the position of the selected item on the selected item editing screen. The items can be overlapped each other. The overlapped presentation of the items can be performed with a "send to front, " "send to back, " and "message adjustment options displayed when an option key is input. If the "send to front" (a "volume up" key) or the "send to back" (a "volume down" key), the controller 110 places the item on or beneath the item in the selected section.

If a fast move key (* key) is selected while the mobile phone is in the selected item editing mode 850, the mobile phone enters the item positioning mode 870. If the item-fixing key is selected, the mobile phone enters an edited item shortcut selection mode 840. If an "add item" option is selected, the mobile phone enters the new item selection mode 860. If a "delete item" option is selected, the mobile phone enters the character house editing mode 820. If a "background" option is selected, the mobile phone enters the background selection mode 830. The transition routes from the selected item editing mode are summarized as shown in table 5.

**Table 5**

| | |
|---|---|
| Functions in screen having a selected item to be edited | Fine position adjustment function (navigation key) |
| | Item overlapping display function (option >> send to front, send to back, volume up/down key |
| Functions to transit another modes | Fast move (* key) - Edited item shortcut selection screen |
| | Select new item (# key) - Item positioning screen |
| | Add item (options>>add item)-new item selection screen |
| | Delete item (options>>delete item) - character house editing screen |
| | Change background (options>>background)-background selection screen |

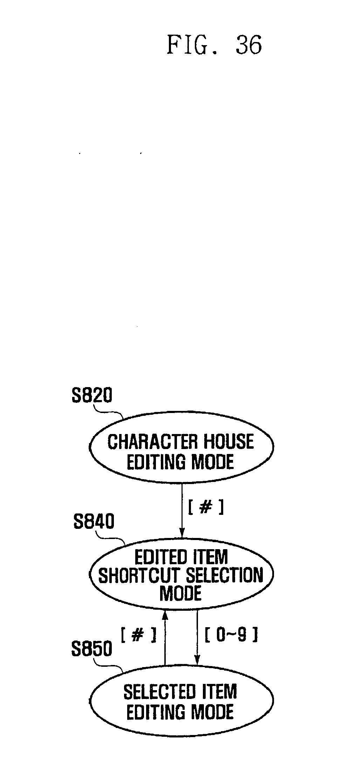

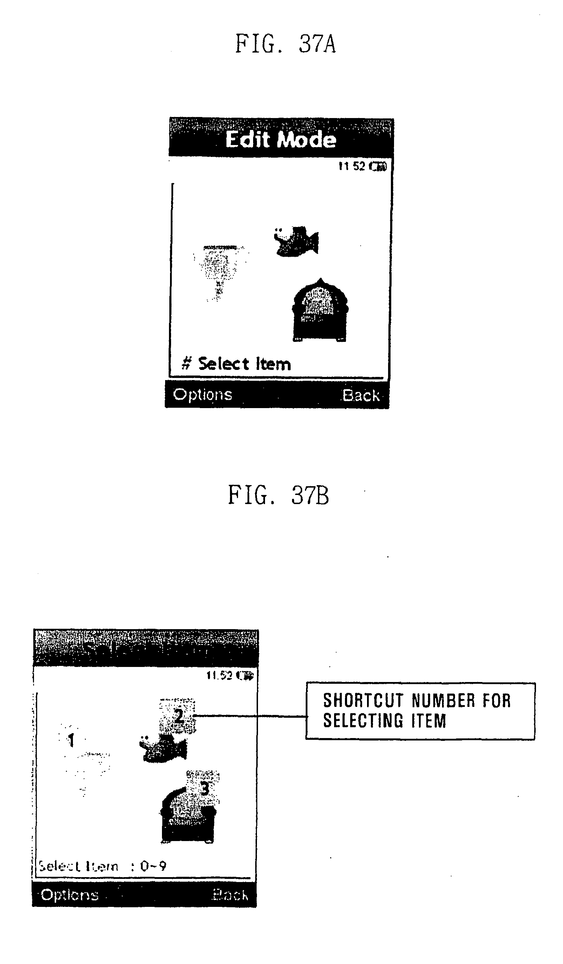

FIG. 36 is a state diagram illustrating transitions between the character house editing mode and the selected item editing mode via the edited item shortcut selection mode of FIG. 25, and FIGs. 37a to 37c show screen images illustrating a procedure for assigning shortcut key in the edited item shortcut selection mode of FIG. 36.

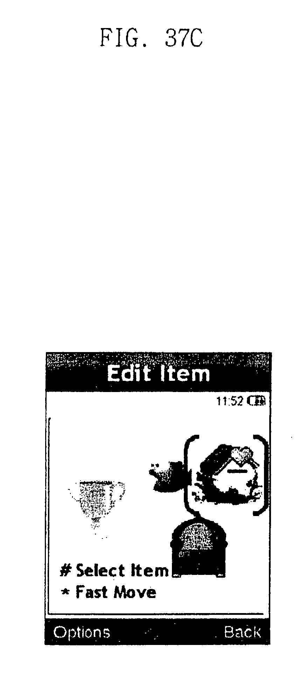

Referring to FIGs. 36 and 37, an item to be edited is selected on the edited item shortcut selection screen in the edited item shortcut selection mode 840. The edited item shortcut selection mode 840 is transited by from the character house editing mode 820 represented by the character house editing screen as shown in FIG. 37a and the selected item editing mode 850 represented by the selected item editing screen as shown in FIG 37b. If the character house editing screen is open, the controller 110 displays the items included in the character house as shown in FIG. 37b. A character house can be provided with maximal 10 items that are number from 0 to 9. Accordingly, if an item fixing key (#) is input while the character house editing screen is displayed, the controller 110 displays the edited item shortcut selection screen so as to assign the section numbers to the items. If a section number of an item in the edited item shortcut selection screen, the controller 110 displays the selected item editing screen so as to display the selected item in a bracket as shown in FIG. 37c. The selected item in the bracket can be finely adjusted in position. If the fast move key (*) is selected to quickly move the selected item at other section, the controller 110 displays the item positioning screen defining the sections.

As described above, the screen image presentation method for a mobile phone according to an embodiment of the present invention enables designing a character house that is used as a screen image in a specific operation mode of the mobile phone. The character house can be edited by adding, deleting, and changing positions of the background and items.

The screen image presentation method provides the mobile phone with the character house editing mode 820 in which the character houses stored in the mobile phone can be selected, deleted, and edited. The mobile phone can switch between the character house-related editing modes for creating a new character house.

The background selection mode 830 is represented by the background selection screen which is accessed from the selected item editing screen of the selected item editing mode 850 or by selecting the "background" option in the menu provided in the selected item editing mode 850. The controller 110 presents the background image together with the title of the background image as shown in the first screen image of FIG. 33. The background image slides according to the direction key (left and right direction keys) manipulation such that it is possible to select one of the background images as the background of the character house.

The operation to add a new item to the character house is explained hereinafter. The new item selection mode 860 enables adding a new item to the character house and transiting to the item positioning mode 870 and the selected item editing mode 850. If the "new item" option is selected in the menu provided in the character house editing mode 820, the controller 110 displays the new item selection screen, as shown in FIG. 35b, representing the new item selection mode 860. The controller 110 presents the item images together with the title of the items. The new item selection screen enables navigating item images using direction keys (left and right direction keys). If one of the items is selected from the new item selection screen, the controller 110 displays the item positioning screen, as shown in FIG. 35c, representing the item positioning mode 870. The item positioning screen 870 is partitioned so as to define several sections as shown in FIG. 35c. In this embodiment, the screen is divided into 9 sections assigned unique section numbers, respectively. If a section number is selected while the itempositioning screen, the controller 110 displays the selected item editing screen as shown in FIG. 35d. The selected item editing screen enables fine adjustment of the position of the selected item. If it is required to add another item, the controller 110 displays the new item selection screen again, i.e. enters the new item selection mode 860.

As described above, the controller 110 presents the items stored in the mobile phone if there is a command input for adding an item to the character house. The screen is divided into several sections for quickly positioning an item on the screen and the item is finely adjusted in a section.

In order to enable changing the position of the item in the character house, the controller 110 operates the edited item shortcut mode 840 and the selected item editing mode 850. That is, the controller 110 assigns the itemnumbers to the items presented with the character house on the edited item shortcut screen and highlights the item selected by the item number as a target item. The target item is edited in the selected itemeditingmode 850 and the itempositioning mode 870.

As described above, the controller 110 enables editing the character house at the steps 719 and 721 of FIG. 24. In these steps, the controller 110 also determines whether to present the character quotients and the state and emotion of the character. Also, the controller 110 enables setting whether to activate the greeting behavior and random greeting event of the character.

The controller 110 also allows editing the background and items and adjusting the position of the items at steps 715 and 717 of FIG. 24. As described above, the character house includes the character, background, and items. The character house can be created in the mobile phone and store at least one character house. The controller 110 of the mobile phone enables selecting one of the character houses in order for a selected character house to be used as a screen image in a specific operation mode of the mobile phone. The background and items constituting the character house can be edited. The background of the character house can be deleted, added, or modified in the character house editing mode under the control of the controller 110. Also, the items of the character house can be deleted or added, and repositioned on the screen in the character house editing mode.

If the character house is created with the character, background, and items, and the character house presentation function is activated, the controller 110 of the mobile phone performs the operations for presenting the character house at steps S711 and S713 of FIG. 24. The character house presentation is performed in the idle mode of the mobile phone at the same or a different time with a start of the idle mode. That is, the character house presentation can be set for starting at the time when the display unit 143 is turned on by opening the clam shell phone or sliding up open the slide phone, or after completing an event of the mobile phone. The character house presentation also can be set for starting when the when a special event occurs. For example, the character house can be presented when checking an incoming message, writing an outgoing message, or checking a phone book.

In the case that the message or information is displayed with the character house, the controller 110 controls such that the character house is presented in a transparency higher than that of the message or information, using the alpha blending method. For, example, the character house is presented in 50% transparency while the message or information in 0% transparency. Also, the character house can be implemented with a display window such the message or information is presented in the display window of the character house. The character house is preferably presented during a preset time, for reducing power consumption of the mobile phone.

If the mobile phone is in the character house presentation mode (S711), the controller 110 controls to present the character house (S713) .

The character house is presented while the controller 110 performs the steps S313 to 315 of FIG. 14. That is, the controller 110 checks the character house configuration information (S313) and determines whether the character house function is turned on (S315). If the character house function is turned on, the controller 110 checks the character house information (S319) and then presents the character house in accordance with the character house information. As described above, the character house includes a background, items, and character. The controller 110 presents the background of the character house according to the procedure of FIG. 15. If the background is time-varying background, the controller 110 checks the current time and present a background image corresponding to the current time. The controller 110 presents the items of the character house according to the procedure of FIG. 16. The controller 110 determines whether the character quotients presentation function is turned on, and presents, if the character quotients presentation function is turned on, the character quotients. The controller 110 analyzes the types of the items and presents the items according to the procedures corresponding to the types of the items. If the item is a motion item, the motion item is presented according to the procedure of FIG. 17. If the item is a function item, the function item is presented according to the procedure of FIG. 18. The presentation of the character is performed according to the procedure of FIG. 19. If the greeting behavior function is set to "on," the controller 110 checks the current time and controls the character to show the greeting behavior if the current time is in a greeting time zone of a day. If a greeting event occur while the character shows the greeting behavior, the controller 110 controls to preset the greeting event according to the procedure of FIG. 21. The behavior of the character house is performed according to the procedure of FIG. 22 and a character movement is performed according to the procedure of FIG. 23.

The controller 110 enables setting the character house functions, editing the character house, and presenting the character house according to the preset functions, according to the procedure of FIG. 24.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

As described above, the character house of the present invention is a virtual space in which an artificial intelligent character resides, talks, and moves such that a user recognize a state of a mobile by means of the character house. The character house facilitates learning functions of the mobile phone and attracts the user's interest to the mobile phone. The character house of the present invention is presented with a character, background image, items, and animation. The character can present a sound effect and text expression reflecting its condition and emotion according to a character scenario, moves around the character house, and shows an animation. The character can express the state and emotion of the mobile phone in various manners so as to make the character house dynamic. The background is used for expressing the character house lively by changing the background image according to a progress of the time, whereby the user can guess the current time from the character house. The items includes decoration items, motion items, and function items. The function items show system information on the mobile phone so as to improve user convenience. The decoration items increase the aesthetic sense of the character house. The motion items move around in the character so as to make the character house dynamic.

The character house can be implemented with a special expression method in which the character greets to the user of the mobile phone with an appropriate sound, text, and behavior at predetermined time zones of a day, so as to make the mobile phone user-friendly. Also, the character house can be implemented such that the character randomly gives a gift to the user, resulting in enjoyment of the user.

## Claims

1. A screen image presentation apparatus for a mobile phone, comprising:
a memory which stores a character house including a character for presenting a condition the mobile phone;
a controller which controls to present the character house at a predetermined presentation time; and
a display which displays the character house under the control of the controller.

2. The screen image presentation apparatus of claim 1, wherein the character house comprises:
items arranged in the character house; and
a background arranged behind the character house.

3. The screen image presentation apparatus of claim 2, wherein the items comprises function items that represent conditions of specific functions of the mobile phone and show respective menus when selected.

4. The screen image presentation apparatus of claim 3, wherein the function items comprise:
a message item for presenting a number of unread messages;
an alarm clock item for presenting scheduled alarms; and
a memory monitor item for presenting memory utilization.

5. The screen image presentation apparatus of claim 3, wherein the items comprise:
motion items that move along predetermined movement paths in the character house; and
decoration items for decorating the character house at fixed positions in the character house.

6. The screen image presentation apparatus of claim 3, wherein the background comprises a plurality of background images changing in accordance with the progress of time.

7. The screen image presentation apparatus of claim 2, wherein the controller controls to present the character house when the mobile phone operates in an idle mode.

8. The screen image presentation apparatus of claim 7, wherein the controller controls to present the character house in time sequence of the background, items and character.

9. The screen image presentation apparatus of claim 8, wherein the controller checks the current time and presents a background image corresponding to the current time.

10. The screen image presentation apparatus of claim 8, wherein the controller checks types of the items and controls to present the items differently according to the type of the item, the types of the items comprising decoration items that are fixed at predetermined positions of the character house, motion items that are moving along predetermined movement paths in the character house, and the function items that shows conditions of the mobile phone.

11. The screen image presentation apparatus of claim 10, wherein the controller analyzes a condition of a function represented by the function item and presents the function item together with an analysis result in the form of a popup window.

12. The screen image presentation apparatus of claim 11, wherein the function items comprises a message item presented together with the number of unread messages in the form of a popup window.

13. The screen image presentation apparatus of claim 11, wherein the function item comprises an alarm item presented together with scheduled alarms in the form of the popup window.

14. The screen image presentation apparatus of claim 11, wherein the motion item moves along the predetermined path in units of movement time.

15. The screen image presentation apparatus of claim 10, wherein the controller determines a position of the character in the character house and animates the character.

16. The screen image presentation apparatus of claim 15, wherein the controller starts presenting the character in a predetermined transparency, outputs sound effects and texts according to progressing the transparency, and animates the character.

17. The screen image presentation apparatus of claim 16, wherein the controller checks the current time and presents a greeting sound and text if the current time is in one of greeting times.

18. A screen image presentation method for a mobile phone, comprising:
checking configuration information on a character house having a character representing a condition that is determined by usage pattern of the mobile phone; and
presenting the character house in a specific operation state of the mobile phone on the basis of the configuration information.

19. The screen image presentation method of claim 18, wherein the character house comprises:
items arranged in the character house; and
a background arranged behind the character house.

20. The screen image presentation method of claim 19, wherein the specific operation state is an idle state of the mobile phone.

21. The screen image presentation method of claim 20, wherein the character house is presented in time sequence of the background, items, and character.

22. The screen image presentation method of claim 21, wherein the items comprise function items that represent conditions of specific functions of the mobile phone and show respective menus when selected.

23. The screen image presentation method of claim 22, wherein the items further comprise:
motion items that move along predetermined movement paths in the character house; and
decoration items for decorating the character house at fixed positions in the character house.

24. The screen image presentation method of claim 23, wherein the background comprises a plurality of background images changing in accordance with the progress of time.

25. The screen image presentation method of claim 23, wherein presenting the character house comprises:
determining whether an item is a function item:
determining, if an item is a function item, whether the function item is set to operating; and
presenting, if the function item is set to operating, the function item together with information collected by a function represented by the function item in the form of a popup window.

26. The screen image presentation method of claim 25, wherein the function items comprise a message item which is presented together with the number of unread messages in the form of the popup window.

27. The screen image presentation method of claim 25, wherein the function items comprise an alarm item which is presented together with scheduled alarms in the form of a popup window.

28. The screen image presentation method of claim 23, wherein each motion item moves along the predetermined path in units of movement time.

29. The screen image presentation method of claim 23, wherein presenting the character house comprises:
determining a position of the character in the character house; and
animating the character at the position.

30. The screen image presentation method of claim 23, wherein presenting the character house comprises:
starting presentation of the character at an appearance position in a predetermined transparency;
outputting sound effects and texts according to progressing the transparency; and
animating the character at the appearance position.

31. The screen image presentation method of claim 29, wherein presenting the character house further comprises:
determining whether a current time is within one of preset greeting time zones of a day; and
presenting a greeting sound and text if the current time is whthin one of the preset greeting time zones.

32. The screen image presentation method of claim 21, wherein presenting the character house comprises:
checking the current time; and
presenting a background image corresponding to one of preset time zones to which the current time belongs.

33. The screen image presentation method of claim 21, wherein presenting the character house comprises:
determining whether an item is a function item;
presenting, if an item is a function item, a function item image corresponding to the function item at a predetermined position in the character house together with information collected by a function represented by the function item in the form of a popup window;
determining, if the item is not a function item, whether the function item is a motion item;
presenting, if the item is a motion item, a motion item image corresponding to the motion item and moving the motion item along a predetermined path in units of movement time; and
determining, if the item is not a motion item, that the item is a decoration item and presenting the decoration item at a predetermined position in the character house.

34. The screen image presentation method of claim 33, wherein presenting the character house further comprises:
determining, if the item is a function item, whether the function item is a mailbox item;
checking, if the function item is a mailbox item, a number of unread messages and presenting the number of the unread messages together with the mailbox item;
determining, if the function item is not a mailbox item, whether the function item is an alarm item;
checking, if the function item is an alarm item, scheduled alarms and presenting the alarm scheduled at the closest scheduled alarm time together with the alarm item;
determining, if the function item is not an alarm item, that the function item is a memory item; and
checking a memory utilization and presenting the memory utilization together with the memory item.

35. The screen image presentation method of claim 33, wherein presenting the character house further comprises:
determining whether a character information presentation function is set to operating;
checking, if a character information presentation function is set to operating, character quotients;
determining an emotion representing the character quotients;
presenting an emoticon and text corresponding to the emotion; and
displaying the character quotients in a character information presentation region.

36. The screen image presentation method of claim 21, wherein presenting the character house comprises:
presenting the character to gradually appear by reducing a transparency of the character in preset steps after the background and the items are presented;
presenting a sound and text corresponding to a condition of the mobile phone; and
moving the character in a predetermined direction.

37. The screen image presentation method of claim 36, wherein presenting the character comprises:
checking the current time;
determining whether the character has been presented in a preset time zone to which the current time belongs; and
presenting, if the character is presented in a time zone to which the current time belongs, a greeting behavior of the character.

38. The screen image presentation method of claim 37, wherein presenting a greeting behavior comprises:
animating the character;
presenting a text, in the form of a text balloon, notifying that the greeting behavior corresponding to the preset time zone is performed;
determining whether the current time is a predetermined greeting event time; and
showing, if the current time is a predetermined greeting event time, the greeting event.

39. The screen image presentation method of claim 38, wherein showing the greeting event comprises:
determining an item or character money to present to the user as a gift;
presenting the determined item or character money; and
presenting a greeting event text in the form of a text balloon together with an animation of the character.

40. A screen image presentation method for a mobile phone, comprising:
registering configuration information of a character house in a program mode;
editing the character house having a background and items in an editing mode;
checking the configuration information of the character house; and
presenting the character house with a character, items, and background on the basis of the configuration information of the character house.

41. The screen image presentation method of claim 40, wherein registering configuration information comprises setting a character house presentation on/off option and a character information presentation on/off function.

42. The screen image presentation method of claim 41, wherein editing the character house comprises:
showing a background image together with a title while editing the background of the character house;
registering the background image as the background of the character house;
adding an item in an item editing mode;
presenting a plurality of sections defined by dividing the character house;
assigning section numbers to the sections;
positioning the item in any of the sections by selecting the corresponding section numbers; and
adjusting a position of the item finely in the section.

43. The screen image presentation method of claim 42, wherein adding an item comprises:
displaying an item image and title of the item image;
showing the sections with section numbers on the character house;
presenting, if a section number is selected, the item in the section to which the section number is assigned;
adjusting the position of the item finely in the section; and
registering a type and position of the item in the character house.

44. The screen image presentation method of claim 42, wherein adjusting a position of the item comprises:
defining sections by partitioning the character house if an item to be edited is selected and assigning section numbers to the sections;
positioning, if an item number is selected, the item in the section corresponding to the section number;
adjusting the position of the item finely in the section; and
registering a type and position of the item in the character house.

45. The screen image presentation method of claim 40, wherein presenting the character house comprises:
determining whether the character house presentation on/off option is set for operating;
extracting, if the character house presentation on/off option is set for operating, identification and position information of the background and items of the character house from the configuration information of the character house; and
presenting the background and items on the basis of the identification and position information and then presenting the character.
